# EUROPEAN PATENT APPLICATION

(11) **EP 4 726 323 A2**
(43) Date of publication of application: **15.04.2026**
(21) Application number: 25206170.0
(22) Date of filing: 01.10.2025
(51) Int. Cl.: G01B 5/00, G01N 21/954, F01D 21/00, G01B 11/24

(54) **INSERTION TOOL FOR INSPECTION**

(30) Priority: 14.10.2024 US 202418915004
(71) Applicant: General Electric Company, Evendale, Ohio 45215 (US)
(72) Inventor: LIU, Chang, Niskayuna, 12309-1027 (US); TRIVEDI, Deepak, Niskayuna, 12309-1027 (US); FOEHNER, Justin Michael, Niskayuna, 12309-1027 (US); GRAHAM, Andrew Crispin, Bristol, BS34 7JU (GB); GRADY, Wayne Ray, West Chester, 45069 (US); KOMMAREDDY, Vamshi Krishna Reddy, 560066 Bengaluru (IN); MEDHI, Biswajit, 560066 Bengaluru (IN)
(74) Representative: Openshaw & Co.

(57) **Abstract**

An insertion tool (105) for inspection is provided, including a tube (116) with a flexible section (118) having at least two joints (122) for articulating the flexible section (118) into different shapes, the flexible section (118) selectively configurable between an unrigidized state and at least a first rigid state having a first non-linear shape. The tool (105) includes an end effector (130) coupled to a distal end of the tube (116) with a sensor head (134), the sensor head (134) to direct a beam toward a target area of the equipment to perform a profilometry operation. The tool (105) includes a waveguide (128) extending through the tube (116), the waveguide to transmit the beam from an electromagnetic source (108) to the end effector (130) and to transmit electromagnetic signals from the end effector to a profilometry device, and an end effector actuator (112) to move the beam at the target area. The end effector (130) is axially spaced from an insertion axis of the tool (105) when the flexible section (118) is in the first rigid state to obtain off-axis profilometry measurements at the target area.

## Description

### TECHNICAL FIELD

These teachings relate generally to an insertion tool, and more specifically to an insertion tool for inspection of an engine.

### BACKGROUND

Insertion tools have a wide range of applications in various industries. In aviation, insertion tools can be used to inspect, service, and repair assembled engines through annular openings. These tools are designed to provide a cost-effective and time-efficient solution for on-wing repair of aircraft engines, eliminating the need for engine disassembly and reducing downtime.

Insertion tools for inspection may include borescopes that can inspect internal areas of engines or other equipment that are difficult to access or not directly visible. Borescopes may employ cameras or other types of probes that can provide a detailed visual inspection of internal components.

### BRIEF DESCRIPTION OF DRAWINGS

Various needs are at least partially met through provision of the insertion tool for inspection described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a cross-sectional schematic view of a high-bypass turbofan jet engine in accordance with some embodiments of the present disclosure.
FIG. 2A illustrates an inspection system including a schematic cross-sectional view of an inspection tool in a first rigidized state configured in accordance with some embodiments of the present disclosure.
FIG. 2B illustrates a simplified side view of the inspection tool of FIG. 2A in an unrigidized state in accordance with some embodiments of the present disclosure.
FIG. 2C illustrates a simplified side view of the inspection tool of FIG. 2A in a second rigidized state in accordance with some embodiments of the present disclosure.
FIG. 3A illustrates an inspection tool in an unrigidized state in accordance with some embodiments of the present disclosure.
FIG. 3B illustrates the inspection tool of FIG. 3A in a first rigidized state in accordance with some embodiments of the present disclosure.
FIG. 3C illustrates the inspection tool of FIG. 3B in a second rigidized state in accordance with some embodiments of the present disclosure.
FIG. 4 illustrates the inspection tool of FIG. 3A inserted in an engine in accordance with some embodiments of the present disclosure.
FIG. 5A illustrates the inspection tool of FIG. 3A inserted in an engine in the second rigidized state and in a first position in accordance with some embodiments of the present disclosure.
FIG. 5B illustrates the inspection tool of FIG. 3A inserted in an engine in the second rigidized state and in a second position in accordance with some embodiments of the present disclosure.
FIG. 5C illustrates the inspection tool of FIG. 3A inserted in an engine in the first rigidized state and in a third position in accordance with some embodiments of the present disclosure.
FIG. 5D illustrates the inspection tool of FIG. 3A inserted in an engine in the first rigidized state and in a fourth position in accordance with some embodiments of the present disclosure.
FIG. 6 illustrates simplified side views of different shapes of an inspection tool configurable by wire-pulling in accordance with some embodiments of the present disclosure.
FIG. 7 illustrates a schematic view of a range of articulation of a joint of an inspection tool in accordance with some embodiments of the present disclosure.
FIG. 8 illustrates an inspection tool configurable by wire-pulling in accordance with some embodiments of the present disclosure.
FIG. 9 illustrates simplified side views of different shapes of an inspection tool configurable by pneumatic elements in accordance with some embodiments of the present disclosure.
FIG. 10 illustrates simplified side views of different shapes of an inspection tool configurable by shape memory elements in accordance with some embodiments of the present disclosure.
FIG. 11 illustrates a schematic diagram of an interferometry technique in accordance with some embodiments of the present disclosure.
FIG. 12 illustrates a simplified cross-sectional view of an end effector of an inspection tool with pneumatically driven rotational scanning in accordance with some embodiments of the present disclosure.
FIG. 13A illustrates a side view of the end effector of FIG. 12 with the housing removed, showing an adjustable beam angle, in accordance with some embodiments of the present disclosure.
FIG. 13B illustrates a top view of the end effector of FIG. 12 with the housing removed, showing another adjustable beam angle, in accordance with some embodiments of the present disclosure.
FIG. 14A illustrates a perspective view of a calibration element of the end effector of FIG. 12 in accordance with some embodiments of the present disclosure.
FIG. 14B illustrates a further perspective view of a calibration element of the end effector of FIG. 12 in accordance with some embodiments of the present disclosure.
FIG. 15 illustrates a simplified cross-sectional view of an end effector of an inspection tool with rotational scanning driven by a rotating optical fiber in accordance with some embodiments of the present disclosure.
FIG. 16 illustrates a simplified cross-section of an end effector of an inspection tool with rotational scanning driven by a rotating flexible shaft in accordance with some embodiments of the present disclosure.
FIG. 17 illustrates a simplified cross-section of an end effector of an inspection tool with rotational scanning driven by a micro motor in accordance with some embodiments of the present disclosure.
FIG. 18A illustrates an end effector of an inspection tool with raster scanning in a first configuration in accordance with some embodiments of the present disclosure.
FIG. 18B illustrates the end effector of FIG. 18A in a second configuration in accordance with some embodiments of the present disclosure.
FIG. 19 illustrates an enlarged view of the end effector of FIG. 18A showing a split beam.
FIG. 20A illustrates a simplified diagram of an end effector of an inspection tool with raster scanning in a first configuration in accordance with some embodiments of the present disclosure.
FIG. 20B illustrates a simplified diagram of the end effector of FIG. 20A in a second configuration in accordance with some embodiments of the present disclosure.
FIG. 21 illustrates an inspection tool having a robotic arm assembly in accordance with some embodiments of the present disclosure.
FIG. 22 is a block diagram of a computing system in accordance with some embodiments of the present disclosure.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

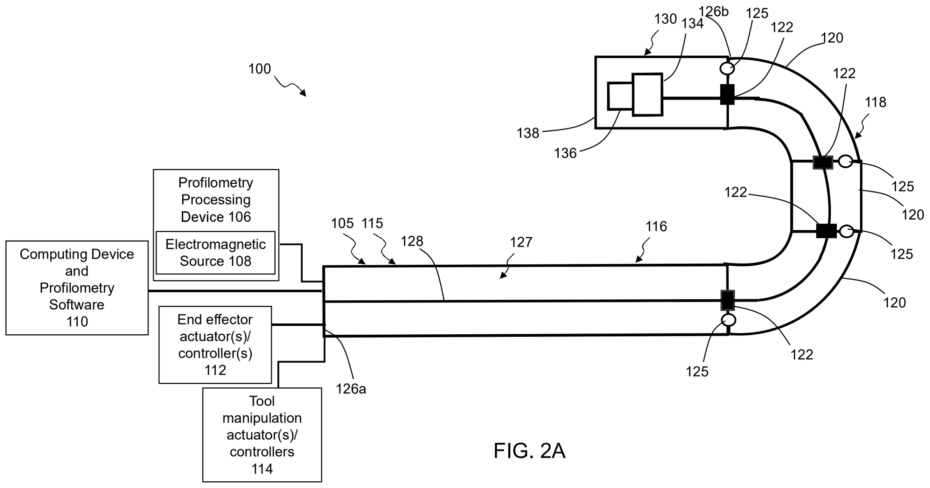

In FIGS. 2A-21, elements generally corresponding to one another in structure and/or function across different embodiments are indicated with reference numerals having the same last two digits and should be understood to have a similar structure and/or function as described in the first instance unless otherwise indicated.

### DETAILED DESCRIPTION

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

There is an increasing need for efficient on-wing inspection of aircraft engines to reduce the time and cost associated with engine disassembly and downtime. However, existing inspection tools have limitations in terms of the path they can take to access the area of interest within the engine. For instance, many existing inspection tools have a primarily linear or straight shape, and/or insufficient flexibility, and thus cannot provide close-up visual access to areas of interest that are offset from the insertion axis or that have a complex geometry. Other inspection tools may be flexible but may be difficult to position at an area of interest and may have low repeatability to ensure receipt of accurate and consistent visual data. In addition, inspection tools such as borescopes may have cameras or other optical sensors that are positioned at a fixed angle, resulting in a limited scanning range. These limitations present significant challenges in the context of aviation application settings.

To address these issues, various embodiments of a reconfigurable insertion tool for inspection, also referred to herein as an inspection tool, including systems and methods employing such a tool, have been developed and are disclosed herein. The embodiments disclosed herein significantly improve the state of confined space inspections.

Generally speaking, the various aspects of the present disclosure can be employed with an insertion tool for inspection that is reconfigurable into different non-linear configurations or shapes so that an end effector comprising a sensor head can conduct a surface inspection on target areas of interest that may be difficult to access from an insertion axis. Furthermore, the end effector of an insertion tool may itself be adjustable or reconfigurable to target precise portions of an area of interest and ensure accurate location data and a comprehensive inspection of the area.

In some approaches, the insertion tool for inspection has improved flexibility by being a selectively rigidizable insertion tool. The end effector can be mounted on the distal end of a rigidizable tube or other structures that can be selectively rigidized. These tools are designed to be initially flexible for easy insertion into the engine and then rigidized to stabilize and orient the end effector towards an area of interest.

In some approaches, such a rigidizable insertion tool may include a tube (also referred to herein as a guide tube) including a flexible section comprising at least two joints for articulating the flexible section into different shapes. In some embodiments, the flexible section may be selectively configurable between an unrigidized state (or nontensioned, slack, and/or flexible state) and at least a first rigid or rigidized state (or tensioned state) having a first non-linear shape. In some embodiments, the flexible section is further selectively configurable to a second rigid state having a second non-linear shape. An end effector may be coupled to a distal end of the tube (e.g., at and end of the flexible section) and include an electromagnetic sensor head to direct or target a beam toward a target area of the equipment to perform the profilometry operation. In some approaches, the tool includes a waveguide extending through the tube, the waveguide to transmit the beam from an electromagnetic source to the end effector and to transmit electromagnetic signals from the end effector to a profilometry detecting device, as well as an end effector actuator to move the beam at the target area. In some embodiments, the end effector is axially spaced from an insertion axis when the flexible section is in the first rigid state to obtain off-axis profilometry measurements at the target area.

In some approaches, a system for performing a profilometry operation on equipment may include an interferometer (or profilometer more generally) including an electromagnetic source and having detection and/or processing modules or devices to determine a characteristic or profile of a target area of the equipment from detected interference patterns, an insertion tool coupled to the interferometer for inserting into the equipment to the target area, and an end effector actuator to move a beam at the target area. In various embodiments, the insertion tool includes a housing that is selectively configurable between different states and/or shapes. In some approaches, for instance, the housing includes a flexible section that is selectively configurable between an unrigidized or flexible state and at least one rigid state having a non-linear shape. In some approaches, the insertion tool includes an end effector coupled to a distal end of the housing to emit a beam from the electromagnetic source to perform the profilometry operation at the target area. The insertion tool may also include a waveguide within the housing to transmit the beam between the interferometer and the end effector.

The present disclosure further provides that the end effector may be configured to rotate the electromagnetic beam for rotational scanning of a targeted area, wherein motion is transferred through the insertion tool to a distal rotatory end effector while still providing flexible path options for insertion into an engine or engine component. The end effector may be adjustable in various ways to change an angle of approach or focal point of the beam towards the target area.

In some approaches, the end effector is configured to raster a beam relative to the end effector for raster scanning of a targeted area. The end effector may be adjustable to change the plane of the raster motion and/or to change an angle of approach or focal point of the beam towards the target area.

The present disclosure further provides insertion tools and systems for performing a surface inspection or profilometry inspection of target areas of interest that are self-calibrating. Specifically, an end effector of an insertion tool that performs a surface inspection includes a surface having one or more discrete surface features engaged by the beam to calibrate the end effector. The surface also permits a speed measurement of the beam to be determined at the head of the end effector or at other portions of the end effector, increasing the accuracy of the profilometry data.

The foregoing and other features and benefits may become clearer upon making a thorough review and study of the following detailed description and the drawings.

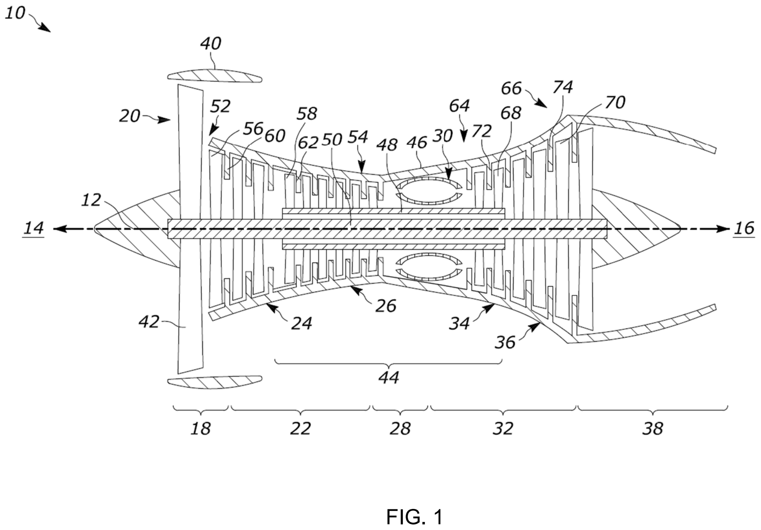

FIG. 1 is a schematic cross-sectional diagram of a conventional gas turbine engine 10 for an aircraft in which an inspection system described herein can operate. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34 and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by a core casing 46 which can be coupled with the fan casing 40. The casing 46 also surrounds LP compressor 24 and HP compressor 26.

An HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

It will be appreciated that the engine 10 may further define a plurality of openings allowing for inspection, servicing, and/or repair of various components within the engine 10 without disassembling or only partially disassembling the engine 10. For example, the engine 10 may define a plurality of insertion tool openings at various axial positions within the compressor section 22, combustion section 28, and turbine section 32. Additionally, the engine 10 may include one or more igniter ports within, e.g., the combustion section 28 of the engine 10, that may allow for inspection, servicing, and/or repair of the combustion section 28.

It should further be appreciated that the exemplary engine 10 depicted in FIG. 1 is by way of example only, and that in other exemplary embodiments, the engine 10 may have any other suitable configuration, including, for example, any other suitable number of shafts or spools, turbines, compressors, etc. Additionally, or alternatively, in other exemplary embodiments, any other suitable turbine engine may be inspected with the systems and methods described herein. For example, in other exemplary embodiments, the engine 10 may not be a turbofan engine, and instead may be configured as a turboshaft engine, a turboprop engine, turbojet engine, etc., or may be an industrial gas turbine engine for electricity generation, fluid pumping, etc. In some embodiments, the systems and methods described herein may be used for the inspection of other aircraft or vehicle components or equipment. In some embodiments, the systems and methods described herein may be used in the inspection of any type of devices or objects susceptible to internal surface damages such as cracks, dents, scratches, corrosions, abrasions, oxidations, etc., that may require servicing and repairs.

With reference to FIGS. 2A-2C, embodiments of an inspection system 100 and inspection tool 105 are shown. The system 100 includes an inspection tool 105 (also referred to as an insertion tool) configured to conduct an inspection, such as a profilometry inspection, at a target area of an engine, equipment, or other space.

As shown in FIG. 2A, the inspection tool 105 includes an elongated insertion member 115 configured for insertion into a long and/or narrow space. The insertion member 115, in some approaches, includes or is defined by an elongated guide tube 116 or housing. An end effector 130 is disposed at a distal end 126b of the insertion member 115 or guide tube 116 and includes an electromagnetic sensor head 134 (including an adjustable reflector 136) for performing the inspection. The elongated insertion member 115 or guide tube 116 facilitates insertion of the inspection tool 105 into a narrow or confined cavity to inspect a surface or component within the cavity. For instance, in some embodiments, the inspection tool 105 may be an engine inspection tool sized and shaped to be inserted into an engine, such as the engine 10 of FIG. 1, through a port (e.g., an opening in the casing 46) and secured to the exterior of the engine 10 to perform operations. As used herein, the end of the insertion member 115 that couples to the end effector 130 is referred to as the distal end 126b, and the opposite end is referred to as the proximal or root end 126a. Generally, the inspection tool 105 is inserted with the distal end 126b first, while at least a portion of the root end 126a may remain outside of the confined space during operations of the inspection tool 105 on a workpiece and physically and/or operably coupled to various actuators, controllers, steering mechanisms, and other components of the inspection system 100.

More specifically, the inspection system 100 may further include one or more tool manipulation actuators and/or controllers 114, one or more end effector actuators and/or controllers 112, a profilometry or interferometry detection and processing device 106 (also referred to herein as a "profilometer" or "interferometer", or a profilometry detecting device) including an electromagnetic source 108, and a computing device 110 programmed with profilometry software.

The inspection tool 105 is operably coupled to the profilometry or interferometry detection and processing device 106 to perform the profilometry operation. As used herein, profilometry is a measurement technique focused on acquiring and analyzing the topographical characteristics of a surface. Profilometry quantitatively assesses surface features such as roughness, texture, and contours by generating a profile or a three-dimensional map of a surface. Profilometry is instrumental in evaluating surface irregularities and deviations, which is important in aviation applications requiring precision-engineered surfaces, quality control, and material characterization. Profilometry can be performed using various techniques, such as contact methods where a physical probe scans over a surface, or non-contact methods (such as those described herein) which may use laser scanning, interferometry, or other optical techniques to create a detailed map of a surface's features without touching it. As used herein, the term "optical" pertains to the properties and technologies associated with the generation, transmission, and utilization of light. As used herein, the term "light" encompasses the visible spectrum as well as other ranges such as the ultraviolet and infrared wavelengths. However, it should also be understood that the profilometry or interferometry devices and sensors described herein, in some approaches, may be adjusted to employ other types of electromagnetic radiation such as radio waves and microwaves, and thus may be construed broadly as electromagnetic sensing/detecting devices. In some approaches, the profilometry detection and processing device 106 may be understood as a sensor or as comprising a sensor or a portion of a sensor.

In some embodiments, the device 106 is an interferometry device (also called an "interferometer"). The interferometry device 106 transmits a beam (e.g., infrared) from an electromagnetic source or light source 108 contained within the device to the end effector 130 of the inspection tool 105 where the beam is directed to scan an area of interest. The beam may be transmitted from the interferometry device to the end effector 130 through a waveguide 128 extending through the tool 105. For instance, the guide tube 116 of the tool 105 may include a central inner cavity 127, such as a channel or passageway, extending a length of the guide tube 116 from the root end 126a to the end effector 130 to enclose the waveguide 128. The waveguide 128, for example an optical fiber, may extend into the interferometry device so that the interferometry device can transfer the beam from the interferometry device to the tool 105. In some approaches, a distal end of a waveguide such as an optical fiber within the interferometry device is positioned to transfer the beam to a proximal end of the waveguide 128 of the tool 105.

As used herein, a waveguide is a structure designed to direct the propagation of electromagnetic waves from one location to another. Waveguides are composed of a material or a combination of materials with specific electromagnetic properties that confine and support the transmission of the waves along a predefined pathway, while minimizing loss and maintaining signal integrity. A type of waveguide may be characterized by geometry, material composition, and the electromagnetic wave mode(s) it supports, and may be tailored to operate within a specified range of frequencies for intended applications in signal transmission.

The waveguides used herein, in some approaches, have sufficient flexibility to enable the inspection tool 105 to configure into different nonlinear shapes (as described further below). An exemplary waveguide for use in the present disclosure is an optical fiber. As used herein, an optical fiber is a slender, flexible strand or fiber designed to transmit light, including but not limited to ultraviolet (UV) radiation, visible light, and infrared (IR) radiation, along its length by the process of total internal reflection. The optical fiber typically includes of a core surrounded by a cladding layer, both of which are made of transparent materials such as glass, silica, plastic, or a combination thereof, where the core has a higher refractive index than the cladding to enable the guiding of light across a broad spectrum of wavelengths.

Other types of waveguides may also be employed such as other dielectric waveguides, metallic waveguides, and optical or mirror-lined waveguides. A mirror-lined waveguide, for instance, includes a laser cavity in which mirrors of the cavity reflect light back and forth. For instance, the waveguide may include a chain of reflectors or mirrors. Mirror-lined waveguides can be designed to accommodate different wavelengths of light (e.g., infrared) by selecting appropriate reflective coatings that offer high reflectivity at the desired wavelengths. Any waveguide, however, should be designed with suitable flexibility to permit the reconfigurability of the inspection tool 105 described herein.

Generally, the interferometry device 106 is configured to transmit the beam to the inspection tool 105 for scanning of the target area as well as to receive reflected light back from the target area through the waveguide 128. The interferometry device 106 is further configured to detect interference patterns that arise from a combination of a reference beam and the reflected light and process the interference patterns to extract depth and measurement data representing at least a portion of the inspected component. In some approaches the generation of data occurs by using a Fourier transform (in Fourier-domain OCT) or by directly observing the interference signal as the reference path length is varied (in time-domain OCT). In exemplary approaches, the interferometry device 106 detects interference patterns for generation of a 3D point cloud of the inspected component. The interferometry device may be further configured to generate image data or an image representing the inspected component. In exemplary embodiments, the interferometry device 106 may be a Michelson interferometer, a Mach-Zehnder interferometer, a Hon-Ou-Mandel interferometer, a NooN state interferometer, a Fizeau interferometer, or a Twyman-Green interferometer. However, many other types of interferometry devices or interferometers known in the art may be employed in the present disclosure without limitation to a specific type of interferometry device or specific interferometry technique. In an exemplary, non-limiting embodiment, the Novacam Microcam^{™}-3D/4D interferometer is employed. In exemplary embodiments, the interferometry device 106 may perform a low-coherence interferometry (LCI) operation, which uses low-coherence light. Coherent light may also be used in various embodiments.

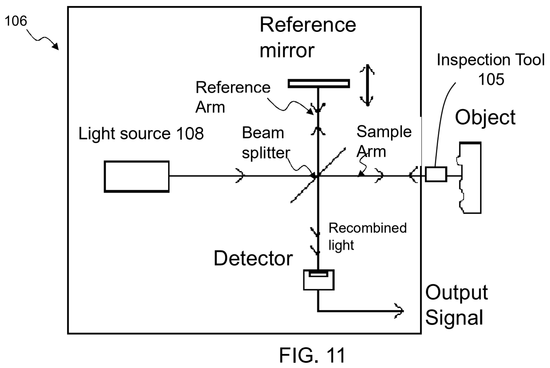

With reference to FIG. 11, in some non-limiting embodiments, an interferometry device 106 splits light (e.g., low-coherence light) from a light source into two paths using a beam splitter-one path directed towards the sample or object (sample arm) and the other towards a reference mirror (reference arm). In some embodiments, a fiber-optic coupler is used to split the light beam. Interference patterns between the recombined reflected reference light and the reflected sample light are then detected, which outputs signals that can be processed (e.g., by the device 106) to determine the surface and depth characteristics of the sample. In some approaches, optical fibers or other waveguides are used as conduits for the light within the interferometry device as well as within the inspection tool 105. As illustrated in FIG. 11, the sample arm of the interferometry device 106 and the inspection tool 105 may be operably coupled (e.g., through a single waveguide or through adjacent waveguides) to transmit light from the interferometry device 106 to the inspection tool 105 and to transmit reflected light from the object back from the inspection tool 105 to the interferometry device 106.

In various embodiments, the light source 108 may include but is not limited to light emitting diodes (LEDs), superluminescent diodes (SLDs), lasers, and/or white light lamps.

Extracted data from the profilometry or interferometry device 106 may be collected, further processed, and displayed via a profilometry or interferometry software program on a computing device 110. Non-limiting functions of the software program include generating and displaying, for example, a 3D point cloud, images such as a cross-section, a light intensity image, and/or a height image, and different data such as dimensional measurements, roughness, surface analysis, thickness, chatter (vibration), and volume loss. The software program may include defect detection by comparing the obtained data to reference CAD models of the inspected component or comparing the obtained data to previous data attained over time. Defect detection may also occur by identifying surface discontinuities based on predefined parameters known to describe a defect, or by identifying a relatively discontinuous measurement compared to a larger surface which is known not to be defective.

In some approaches, the software program of the computing device 110 may also provide control functions with respect to the inspection. For instance, the software may allow an operator to adjust settings of the interferometry device, program an inspection, and control the movement and/or scanning of the inspection tool 105 during an inspection.

As noted above, in connection with FIG. 2A, the inspection system 100 may include one or more tool manipulation actuators or controllers 114 to drive movement (e.g., displacement or rotation) and selective articulation of the inspection tool 105 during an inspection. The tool manipulation actuators or controllers 114 may include components external to the insertion member 115 of the insertion tool 105 and operatively coupled thereto and/or components that are integrated within the insertion member 115. As described further below, a tool manipulation actuator 114 may include one of several types of rigidization actuators, described further below, to change the inspection tool 105 from a flexible, unrigidized state to a rigidized state, and, in some approaches, change the inspection tool 105 between different rigid shapes.

The inspection system 100 may also include one or more end effector actuators or controllers 112 as noted above, which provide power/torque to move or articulate components of the end effector 130 to control movement of the beam at the inspection area. For instance, as described further below, an end effector actuator may function to cause rotation of components of the end effector 130 to rotate the beam. Other end effector actuators may function to adjust an angle of a beam (e.g., by adjusting mirrors or other reflectors contained in the end effector 130) or cause raster scanning of the beam, as described further below. The end effector actuators 112 described herein may have components external to and/or within the end effector 130.

It is noted that the various controllers to control the movement or other parameters of the inspection tool 105 to perform the inspection may be consolidated into a single controller or may be separate. Different embodiments of controllers are also contemplated. Such embodiments include but are not limited to simple electric or mechanical switches actuatable by an operator of the inspection system 100. Other embodiments include microcontrollers, computer processors, and other similar devices known to those of skill in the art that are either manually operated or automatically operated in response to executing preprogrammed command instructions. Further still, in some embodiments, the controllers and actuators can comprise separate distinct respective circuitry, components, etc. for directing the operation of the inspection tool 105 or components thereof such as the end effector 130.

In some embodiments, the inspection tool 105 is flexible and reconfigurable. The insertion member 115 or guide tube 116 of the inspection tool 105 includes at least one flexible section 118. The flexible section 118 may be a portion of the guide tube 116 configured to articulate the guide tube 116 into different shapes or geometries. For instance, the flexible section 118 may include one or more links 120 or segments of the guide tube 116. In the illustrated example, the flexible section 118 is depicted as having three links 120 plus an end effector 130, but can include any number of links (e.g., two, four, five, six, seven, etc.).

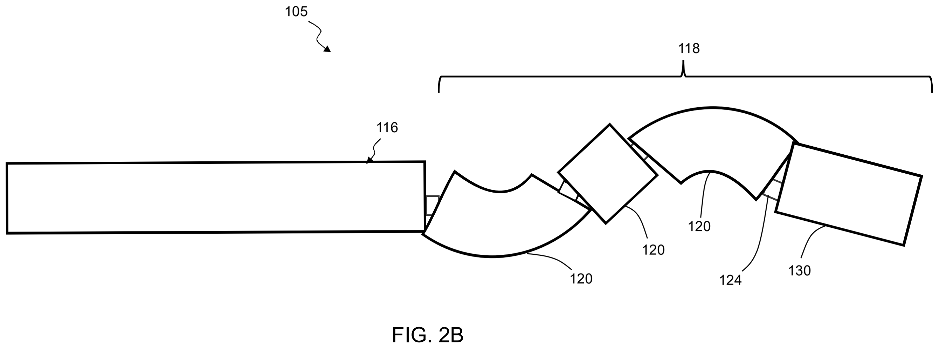

In some embodiments, the links 120 are linked together via one or more coupling elements 124 or connecters (e.g., springs, hinges, flexible splines, cables) (FIG. 2B) between the links 120 or running through the links 120. In some approaches, the links 120 may interface at one or more joints 122, hinges, or other interfacing elements that permit articulation of the links 120 relative to one another or relative to the rest of the guide tube 116 so that the guide tube 116 can be configured into different shapes. In an exemplary approach, the flexible section 118 includes at least one, or at least two joints 122 for articulating the flexible section 118 into different shapes. The guide tube 116 may also include an elongated portion (e.g., closer to the proximal end 126a) that does not include links. In some embodiments, the guide tube 116 may include telescoping links or sections.

In some embodiments, one or more of the links 120 of the flexible section 118 are rigidizable links and the flexible section 118 is selectively configurable between an unrigidized state and one or more rigidized or rigid states. FIG. 2B illustrates the inspection tool 105 in the unrigidized relaxed state in which the rigidizable links 120 are not engaged (e.g., spaced apart, touching, or touching but not tensioned). In this state, the links are capable of movement in some (one, two, three, etc.) degrees of freedom relative to each other allowing the flexible section 118 to bend during the insertion of the insertion tool 105. Once the tool 105 is inserted into position, the insertion tool 105 may be rigidized, from the unrigidized state shown in FIG. 2B to a rigidized state, such as the rigidized state shown in FIG. 2A, to position the end effector 130 at a desired location and orientation to allow for inspection of a part such as an engine component.

The links 120 include central cavities that generally align to define in part the elongated cavity 127 or channel of the guide tube 116 that contains the waveguide 128. The cavity 127 of the guide tube 116 may be a discontinuous cavity when the tool 105 is in the unrigidized state and may be substantially continuous when the tool 105 is in the rigidized state. For inspection tools 105 that are pneumatically driven, sealing elements 125 may be positioned at the interface between the links 120 (and between an end link 120 and the end effector 130) to provide a fluid seal when the links 120 are rigidized such that a fluid path forms to deliver fluid to one or more of the links 120 or end effector 130. The sealing elements 125 may include one or more of a bellow, a gasket, a spline seal, or an O-ring disposed between adjacent links.

The links 120 may include end features that engage with adjacent links to rigidize the flexible section 118 into a predefined shape or geometry when force is applied via a tool manipulation actuator 114 such as a rigidization actuator. When rigidized, the links 120 may define a complex geometry extending through a three-dimensional cartesian coordinate system. That is, the guide tube 116 of the inspection tool 105 may simultaneously extend in the X-, Y-, and Z-axes along its length from the proximal end 126a to the distal end 126b. The particular rigid shapes of the tool 105 can be predefined based on the shape of the intended environment within which the tool 105 is to be used. In some embodiments, the inspection tools described herein include one or more links, joints and/or rigidization mechanisms and actuators as described in U.S. Patent Application Publication US2022/0221706A1, U.S. Patent Application Publication US2022/0221707A1, U.S. Patent Application Publication US2020/0114528A1, U.S. Patent US11752622B2, U.S. Patent US11692650, U.S. Patent US10884232B1, U.S. Patent Application 18/230,558 filed August 4, 2023, and U.S. Application 18/735,791 filed June 6, 2024, the entireties of which are incorporated herein by reference.

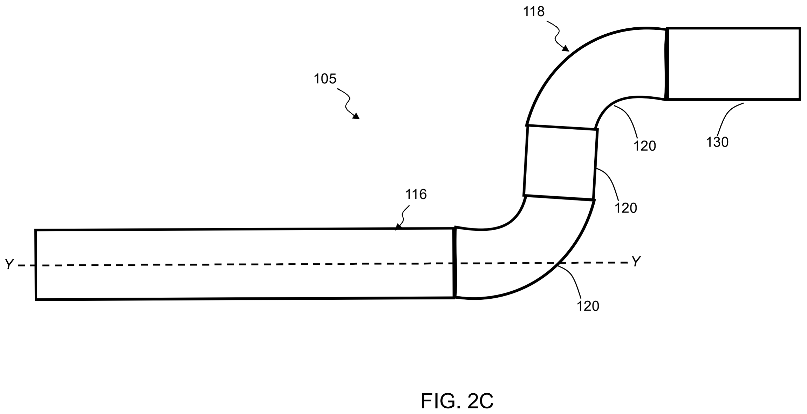

More specifically, in some approaches, the flexible section 118 includes at least two joints 122 for articulating the flexible section 118 into different shapes. In some embodiments, the flexible section 118 may be selectively configurable between an unrigidized state and at least a first rigid state having a first non-linear shape or geometry, such as the shape or geometry shown in FIG. 2A. In some embodiments, the flexible section 118 is further selectively configurable to a second rigid state having a second non-linear shape or geometry, such as the shape or geometry shown in FIG. 2C. While two different shapes are illustrated, it is also contemplated that the flexible section 118 can be designed to be reconfigured into one, three, four, five, six, or more different rigid, non-linear shapes or geometries. In some approaches, the flexible section 118 may be rigidizable into a linear shape (aligned with or angled with respect to the rest of the guide tube 116). In some embodiments, the links 120 may themselves have different shapes or lengths to contribute to the formation of the rigid pre-defined shapes.

In exemplary embodiments, as shown in FIGS. 2A and 2C, the rigid non-linear shapes result in the end effector 130 being axially spaced from an insertion axis or a main longitudinal axis Y of the guide tube 116 so that the end effector 130 is moved closer to off-axis locations within a confined space. In addition, the different rigid non-linear shapes may permit selective reconfiguration of the inspection tool 105 to orient a distal end 138 of the end effector 130 in different directions. For instance, the different predefined shapes shown in FIGS. 2A and 2C orient the end effector 130 in substantially opposite directions (about 180 degrees). In addition, the illustrated predefined shapes position the end effector 130 substantially parallel to the main longitudinal axis Y of the guide tube 116 and in the same plane as the rest of the guide tube 116. However, in various embodiments, different predefined shapes may orient the end effector 130 at different angles relative to one another. For instance, different shapes may orient the end effector 130 at different angles providing end effector positions at least 10, 20, 30, 45, 60, 75, 90, 110, 120, 150, or 180 degrees apart. Furthermore, the different shapes or geometries may position the end effector 130 in different planes relative to one another and/or relative to the rest of the guide tube 116.

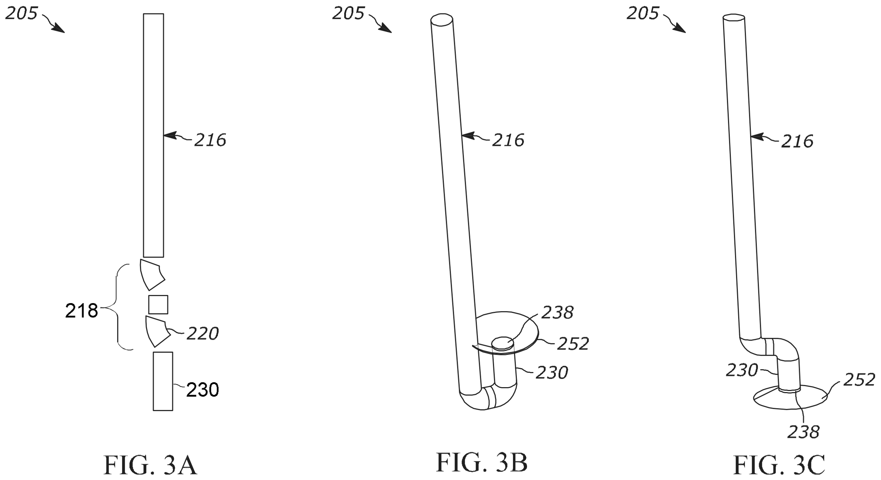

FIGS. 3A-3C, 4, and 5A-5D illustrate an exemplary inspection tool 205 that is similar in many respects to inspection tool 105. As shown in FIGS. 3A-3C, the inspection tool 205 includes rigidizable links 220 so that the tool 205 is selectively rigidizable and configurable between an unrigidized relaxed state (FIG. 3A), a first rigidized state having a first geometry (FIG. 3B), and a second rigidized state having a second geometry (FIG. 3C). Like with inspection tool 105, the first and second rigidized states of inspection tool 205 each provide the flexible section 218 of the tool 205 with a non-linear shape that radially spaces the end effector 230 from the main longitudinal axis of the guide tube 216 and orients the end effector 230 in substantially opposite directions so that a distal end 238 of the end effector 230 is targeted to different areas to achieve a different scanning coverage area 252. The rigid shapes and the orientations of the end effector 230, as well as the number of shapes and links, however, are not limited to those that are illustrated.

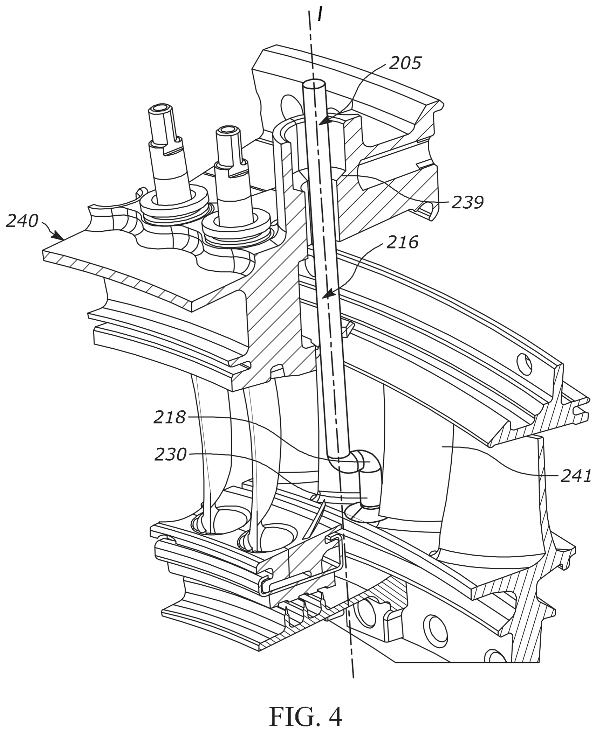

FIG. 4 illustrates the guide tube 216 of the inspection tool 205 inserted into a port 239 of an engine 240 along an insertion axis *I*. As illustrated, the flexible section 218 of the guide tube 216 has been rigidized to the second rigid state to provide the first non-linear rigid shape of the flexible section 218. Specifically, the rigid shape radially spaces the end effector 230 from the insertion axis *I* so the end effector 230 is advantageously positioned closer to blades 241 of the engine 240 intended for inspection. The tool 205 can subsequently be unrigidized to its relaxed, flexible state so that it can be removed through the port 239. Thus, the inspection tool 205 is particularly useful in confined area inspections in which an inspection area of interest is radially spaced from the insertion axis, such as in the inspection of engine blades.

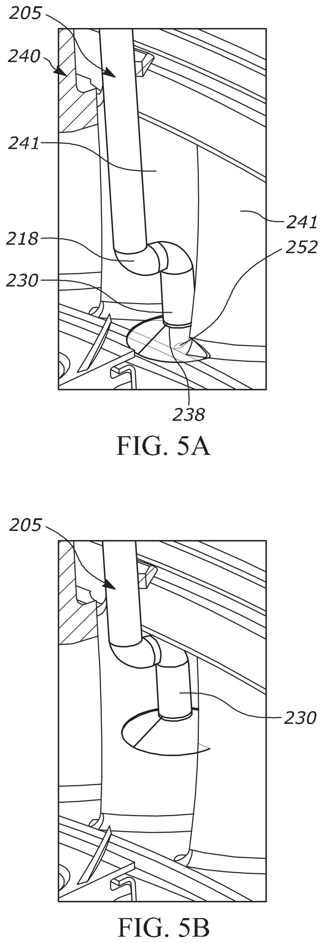

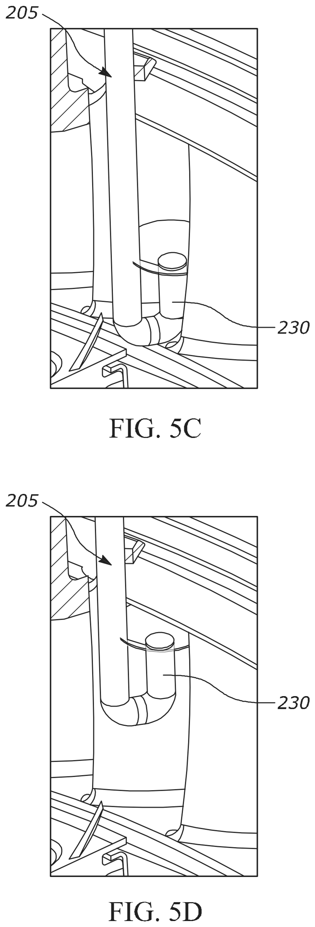

FIGS. 5A-5D show the inspection tool 205 in various configurations and positions inspecting blades 241 of the engine 240. To scan a root area of a blade 241 the inspection tool 205 is rigidized to the first second state so that the end effector 230 is radially spaced from the insertion axis, positioned between two blades 241 and in front of a target blade 241, and with a distal end 238 of the end effector 230 facing downward and positioned to scan a root area of the blade 241. In embodiments where the end effector 230 has rotational scanning (as illustrated), the end effector 230 has a scanning coverage area 252 of the entire root, as shown in FIG. 5A. As shown in FIG. 5B, translation of the inspection tool 205 so that the end effector 230 translates along the blade 241 to the mid-span region allows completion of a root to mid-span scan (for example, before or when the tool 205 contacts an upper boundary of the engine). Subsequently, the configuration of the tool 205 can be switched to the first rigid state to scan a tip area of the blades. As shown in FIGS. 5C and 5D, in this configuration the end effector 230 is radially spaced from the insertion axis, positioned between the two blades 241 and in front of a target blade 241, and with the end effector 230 facing upward and positioned to scan the tip area of the blade 241. Translation of the end effector 230 between the mid-span position shown in FIG. 5C and the tip-scanning position shown in FIG. 5D allows completion of a tip to mid-span scan. In embodiments, the tool 205 inspects two adjacent blades concurrently. In embodiments, the edges and/or surfaces of the blades 241 may be inspected.

Since the end effector 230 is able to be positioned directly in the cavity between the blades 241, instead of further away on the insertion axis *I*, the profiling operation is able to attain highly accurate profiling data. In addition, the use of pre-defined rigid states, coupled with automated, controlled positioning of the tool and automated, controlled scanning (e.g., via one or more of the tool manipulation actuators and/or controllers 114 and one or more of the end effector actuators and/or controllers 112 (FIG. 2A)), ensures the operation is repeatable to attain precise comparative data over the life of the engine or other component.

The inspection tools and systems described herein, as noted above, include one or more tool manipulation actuators and/or controllers 114 (FIG. 2A). For an inspection tool that is rigidizable, as described above, the tool manipulation actuator 114 includes a rigidization actuator configured to actuate the plurality of rigidizable links in the flexible section from the unrigidized state to a rigid state, and, where there are multiple predefined rigid shapes, to actuate a selected rigid shape and articulate the flexible section between the rigid shapes. In some approaches, the rigidization actuator selectively configures at least one joint between at least two rigidizable links via rope or wire pulling, magnets, pneumatic bellows, shape memory materials, or bi-stable structures to actuate the flexible section from the unrigidized state to the rigidized state (and/or between different rigid states). A variety of other rigidization techniques and actuators are also possible. For example, in various embodiments, the rigidization actuator may cause rigidization of the flexible section via a layer jamming mechanism, electromagnetic stiffness tuning of magnetorheological materials, electromagnetic stiffness tuning of electro-rheological fluids, stiffness modulation with phase change, stiffness modulation with pressurization, or other rigidization means.

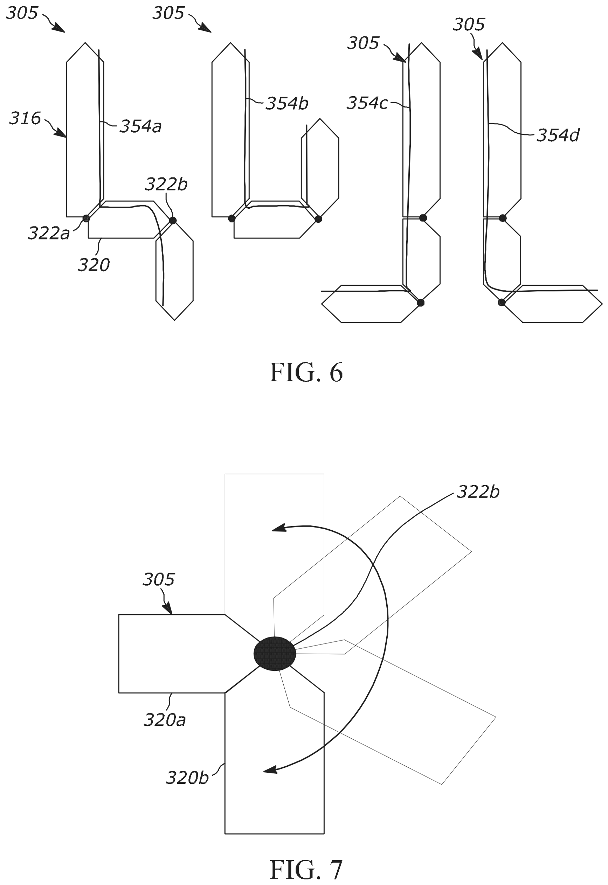

For instance, with reference to FIG. 6, in some embodiments, the rigidization actuator may include a tension rope assembly inserted through the plurality of rigidizable links 320 and coupled to an end link or the end effector to cause tensioning of the links 320 with the pulling of the rope assembly, such as described in U.S. Patent Application Publication US2022/0221706A1, U.S. Patent Application Publication US2022/0221707A1, U.S. Patent Application Publication US2020/0114528A1, U.S. Patent US11752622B2, and U.S. Patent US11692650B2, the entireties of which are incorporated herein by reference.

During tensioning of the ropes, adjacent links 320 may pivot relative to one another until the ropes reach a critical tension whereby the tool is rigidized. In some approaches, the ropes (or wires, cables, strands, strings) may be manually pulled or tensioned at the proximal end of the tool 305. In other approaches, the pulling of the ropes to rigidize and reconfigure the shape of the tool may be automated and driven via motors. In some approaches, four ropes 354a, 354b, 354c, 354d span substantially an entire length of the guide tube 316 and are positioned to force the links 320 into specific predefined geometries when they are selectively pulled while simultaneously driving the links 320 together to tension and rigidize the tool 305. Other quantities of ropes are also possible, depending on the desired adjustability of the shape of the tool.

Typically, the ropes work in tandem with the joints, end features, hinges, or other interface components between the links to pivot and secure the links into the pre-defined rigid shapes. FIGS. 6, 7, and 8 illustrate this concept. FIG. 6 illustrates inspection tool 305 in a first predefined rigid state having a first geometry that occurs when rope 354a is pulled, in a second predefined rigid state having a second geometry that occurs when rope 354b is pulled, in a third predefined rigid state having a third geometry that occurs when rope 354c is pulled, and in a fourth predefined rigid state having a fourth geometry that occurs when rope 354d is pulled. Specifically, the selective pulling of the ropes articulates the links relative to one another at the joints 322a, 322b to provide the different rigid states and geometries. In one embodiment, shown in FIG. 7, a joint 322b may be configured so that a link 320b can be selectively moved into a plurality of different positions relative to link 320a.

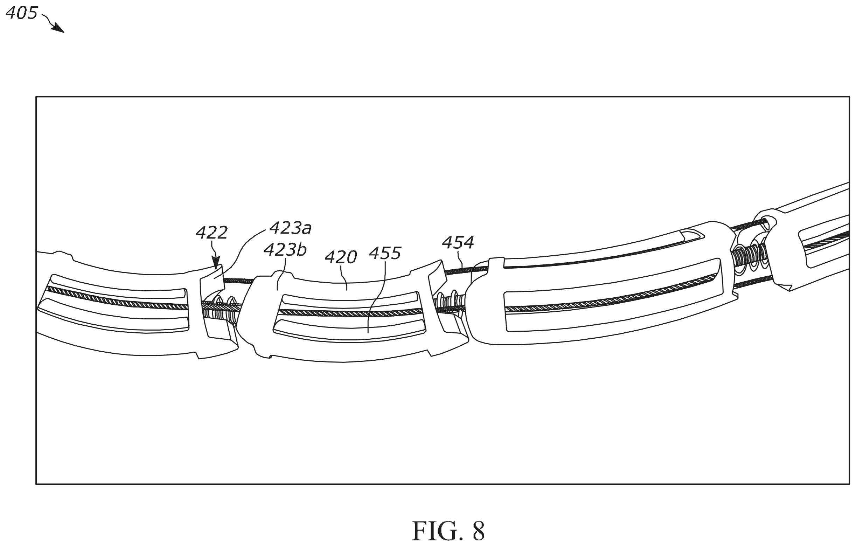

FIG. 8 illustrates an inspection tool 405 similar to inspection tool 305 having a tension rope assembly. Specifically, inspection tool 405 includes side channels 455 through which a plurality of ropes 454 extend. Selective pulling of the ropes 454 brings mating end features (e.g., 423a and 423b) of consecutive links 420 together at each joint 422 to rigidize the tool 405 into one or more predefined rigid shapes or geometries. Springs may be present between consecutive links 420 that compress in the rigidized state so that the links 420 are forced away from each other with the tool 405 is unrigidized to ensure the flexibility of the tool 405.

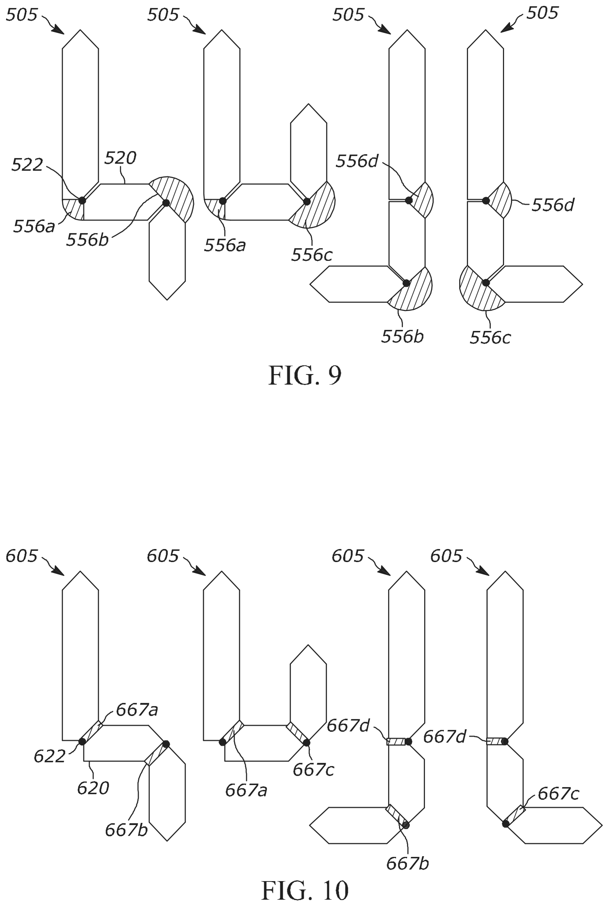

FIGS. 9 and 10 illustrate inspection tools with alternative rigidization mechanisms. FIG. 9, for instance, illustrates a pneumatic mechanism. Inspection tool 505 includes pneumatic bellows or other inflatable structures 556a, 556b, 556c, and 556d at the joints 522 between adjacent links 520. The inflatable structures 556a, 556b, 556c, 556d are selectively inflated or deflated to configure the tool 505 between different states and/or shapes. For instance, an unrigidized state of the tool 505 may occur when the inflatable structures are deflated, resulting in looseness and flexibility at the joints 522 to facilitate insertion and travel of the tool 505 through a narrow, winding, or confined space. The inflatable structures may then be inflated to rigidize the tool 505. For instance, selective inflation of the inflatable structures can engage surfaces at the joints 522 to force adjacent links 520 in a specific direction or configuration. Further, in some approaches, the amount of inflation of each of the inflatable structures 556a, 556b, 556c, 556d may be controlled to articulate the links 520 relative to one another to form one or more predefined rigid shapes of the tool 505. In the illustrated approach, for instance, at least four different shapes of the tool 505 are provided depending on differential inflating of inflatable structures 556a, 556b, 556c, and 556d. Advantageously, the different predefined shapes specifically orient an end effector (not shown) at the distal end of the tool in different directions (e.g., four different directions 90 degrees apart) for ease of targeting the inspection towards different sides of a confined space.

FIG. 10 illustrates a rigidization mechanism that employs shape memory alloy (SMA) materials to modulate the stiffness of the tool. An SMA is generally an alloy capable of returning to its original shape after being deformed. For instance, certain SMAs may be heated in order to return a deformed SMA to its pre-deformed shape. An SMA may also provide varying stiffness, in a predetermined manner, in response to certain ranges of temperatures. The change in stiffness of the shape memory alloy is due to a temperature-related, solid state micro-structural phase change that enables the alloy to change from one physical shape to another physical shape. The changes in stiffness of the SMA may be developed by working and annealing a preform of the alloy at or above a temperature at which the solid state micro-structural phase change of the shape memory alloy occurs. The temperature at which such phase change occurs is generally referred to as the critical temperature or transition temperature of the alloy. Exemplary but non-limiting examples of SMAs may include nickel-titanium (NiTi) and other nickel-titanium based alloys such as nickel-titanium hydrogen fluoride (NiTiHf) and nickel-titanium palladium (NiTiPd). However, it should be appreciated that other SMA materials may be equally applicable to the current disclosure. For instance, in certain embodiments, the SMA may include a nickel-aluminum based alloy, copper-aluminum-nickel alloy, or alloys containing zinc, copper, gold, and/or iron. Shape memory polymer (SMP) materials may also be employed.

In some approaches, structures 667a, 667b, 667c, and 667d formed from SMA or SMP materials may be positioned at different points at the joints 622 or interfaces between adjacent links 620 of the tool 605 and selectively activated to force articulation of the links 620 relative to one another. In some embodiments, the joints 622 may include reversible SMA hinge actuators as described in "Design and modelling of a reversible shape memory alloy torsion hinge actuator", Qiang Liu et al., Materials & Design, vol. 237 (January 2024) and in "A novel low-profile shape memory alloy torsional actuator", Jamie Paik et al., Smart Materials and Structures, 14952(19) (December 2010), the entireties of which are incorporated herein by reference. In an exemplary configuration, for instance, different heating and cooling cycles cause an actuator hinge comprising an SMA wire and a superelastic wire (e.g., nitinol) to alternate between two pre-set actuation angles. Other rigidization approaches using SMA materials or phase change materials are described in U.S. Patent Application Publication US2022/0221706A1, U.S. Patent Application Publication US2022/0221707A1, and U.S. Patent US10884232B1, the entireties of which are incorporated herein by reference. For instance, as described in U.S. Patent US10884232B1, each link can include an associated phase change material that is regulated to provide a desired stiffness or rigidity for each link. In some approaches, the phase change material allows movement or flexing at the joints when the phase change material is in a first state and inhibits some movement or flexing at the joints when the phase change material is in a second state. In these approaches, the tool manipulation actuator 114 (FIG. 2A) may include a controller configured to switch the state of the phase change material between the first state and the second state.

In some approaches, a tool manipulation actuator 114 (FIG. 2A) may be configured to actuate one or more bi-stable structures that may be present between different links (e.g., at the joints). Using bi-stable structures to enable reliable switching between different configurations is described in "Transformation Dynamics in Origami", Chang Liu et al., Phys. Rev. Lett. Vol. 121, issue 25, (December 2018), the entirety of which is incorporated herein by reference. In these approaches, an actuator switches a bi-stable structure (e.g., a mechanical Miura origami fold) between at least two stable configurations. In some approaches, a bi-stable structure is configured to snap into different configurations through buckling or other mechanisms. In some embodiments, the bi-stable structures may have a first configuration that permits the tool to be in an unrigidized state and one or more additional configurations that permit the tool to be in one or more rigid states. For instance, in one approach the tool is in a relaxed or flexible unrigidized state when components of a bi-stable structure are separated. When the components of the bi-stable structure are fitted together (e.g., via wire rope driving the components together to snap them into the bi-stable structure), the bi-stable structure is then controllable to switch between different rigid, stable configurations to articulate the links of the tool.

In some embodiments, the inspection tools described herein employ a robotic arm assembly (also referred to as a "snake-arm" assembly) for providing a flexible, reconfigurable tool. For instance, the insertion member 115 (FIG. 2A) may be configured as a robotic arm of a robotic arm assembly and the robotic arm may be articulated to target the end effector 130 to the inspection location. Such robotic arms and robotic arm assemblies that may be employed include those described in U.S. Patents US8069747B2, US8126591B2, US8219246B2, US8374722B2, US8635928B2, US7171279B2, US7543518B2, US10962345B2, US11458641B2, and US11084169B2 and EP Patent EP2170565B1, the entireties of which are incorporated herein by reference. The robotic arm assemblies include a robotic arm formed of a plurality of links joined together at respective joints. A plurality of control wires may extend through the robotic arm, with each wire terminating at an individual link for moving such link relative to an aft-adjacent link. The control wires may be coupled to one or more motors within a base of the robotic arm assembly, such that the robotic arm assembly may control movement of the robotic arm by increasing and/or decreasing tension on the plurality of control wires. The arm has high degrees of freedom so that the arm can be controlled in a snake-like manner, changing its shape or curvature, to follow a contoured path and avoid obstacles.

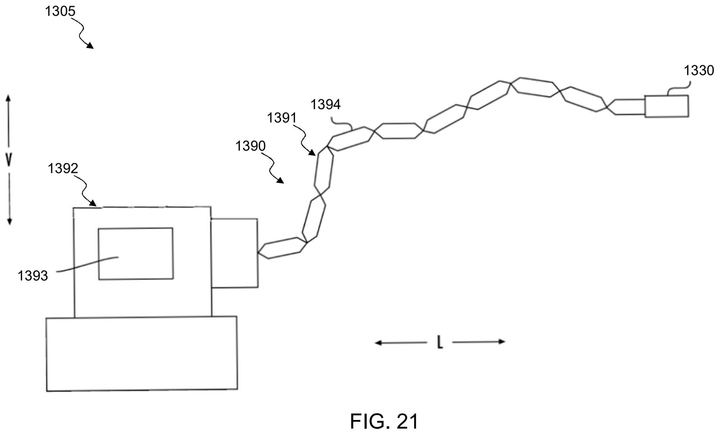

An exemplary inspection tool 1305 comprising a robotic arm assembly 1390 is shown in FIG. 21. The insertion member of the inspection tool 1305 is configured as a robotic arm 1391 and an end effector 1330 is attached to the robotic arm 1391 at a distal end thereof to perform an inspection. The robotic arm assembly 1390 generally defines a vertical direction V, a longitudinal direction L, and a lateral direction (perpendicular to the longitudinal direction L and vertical direction V; not shown). Although not depicted, the robotic arm defines a passage therethrough which encloses the waveguide in communication with a profilometry or interferometry processing device and the end effector 1330. The robotic arm assembly 1390 further includes a base 1392. For the embodiment shown, the base 1392 generally includes one or more motors 1393 operable to actuate the robotic arm 1391.

The robotic arm 1391, as illustrated, includes a plurality of segments 1394 or links sequentially arranged and extending between the base 1392 and the end effector 1330, e.g., generally along the longitudinal direction L of the robotic arm assembly 1390 for the embodiment shown. Each segment 1394 may be movable relative to a forward-adjacent segment and aft-adjacent segment with multiple degrees of freedom to form the shape of the arm 1391 shown in FIG. 21. For example, each segment 1394 may be movable relative to the forward-adjacent and aft-adjacent segments along the vertical direction V of the robotic arm assembly 1390 and/or along the lateral direction (perpendicular to the longitudinal direction L and vertical direction V). In such a manner, the robotic arm 1391 may generally be movable to form various three-dimensional shapes to move through a confined space and position the end effector 1330 proximate to a number of different components within an interior of the engine.

As noted above, the robotic arm assembly 1390 illustrated is a motorized robotic arm assembly. In certain exemplary embodiments, the one or more motors 1393 of the base 1392 may generally pull on various wires (not shown) extending through the robotic arm and terminating at individual segments 1394 of the robotic arm. By selectively pulling on these various wires, the one or more motors 1393 of the base 1392 may control movement of each segment 1394 of the robotic arm.

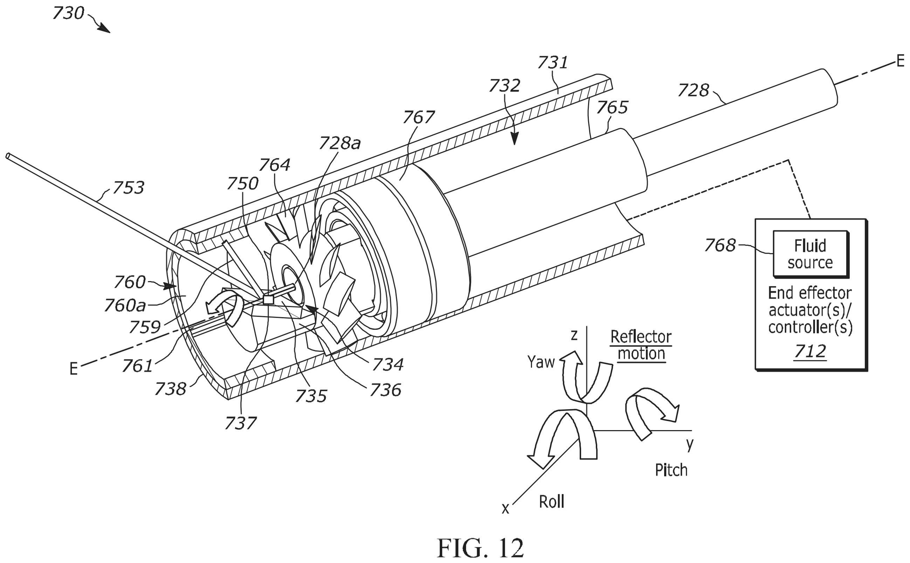

FIG. 12 illustrates an end effector 730 in accordance with some embodiments. With reference to FIGS. 2A and 12, the end effector 730 can be coupled to a distal end of the insertion member 115 or guide tube 116 of the inspection tool 105. In some embodiments, the end effector 730 is coupled to an end link 120 of the flexible section 118 (FIG. 2A). As described above, the end effector 730 can be moved and oriented in different directions relative to other portions of the insertion member 115 when the inspection tool 105 is rigidized and/or when the shape of the inspection tool 105 is changed (FIG. 2A).

The illustrated end effector 730 is configured for rotational scanning of the targeted inspection area. Advantageously, an inspection tool containing the end effector 730 is configured so that rotational scanning at the tip is possible without needing to rotate the entire inspection tool (e.g., the entire insertion member 115 or guide tube 116 (FIG. 2A)). Since the entire inspection tool is not rotated, this makes it possible for the inspection tool to be configured into different geometries and shapes as detailed above to target the end effector 730 to a confined and/or off-axis area. Thus, a reconfigurable, flexible inspection tool is provided that also permits rotational scanning of an end effector 730.

The end effector 730 includes a housing 731 that may be coupled to the guide tube 116, such as to an end link 120 of the guide tube 116. In other approaches the end effector 730 may be coupled to other types of insertion member 115 such as a robotic arm, as discussed above. The housing 731 includes a central inner cavity 732. For pneumatically driven end effectors, such as end effector 730, the housing 731 of the end effector 730 and the guide tube 116 may define a sealed channel formed from the inner cavity 732 of the end effector 730 and the cavity 127 of the guide tube 116. The housing 731 further defines a distal open end 738 of the end effector 730.

The housing 731 encloses an electromagnetic sensor head 734 and a distal portion of the waveguide 728 (e.g., an optical fiber). As used herein, "sensor head" refers to a head portion of the end effector 730 configured and positioned to target light received from the profilometry or interferometry device 106 (FIG. 2A) towards the target area of the object. The sensor head is also where reflected light from the object is received at the waveguide to be transmitted to the interferometry device for sensing/detecting of interference patterns and further processing. The "sensor head" alone or in combination with the entire end effector may also be referred to as a "probe".

At the electromagnetic sensor head 734, a beam 750 from the electromagnetic source 108 is emitted from a distal end 728a of the waveguide 728 towards the open end 738 of the end effector 730 to perform the inspection. In some approaches, the waveguide extends axially along a central axis E of end effector 730 and emits the beam 750 along the same axis. The sensor head 734 further includes an adjustable reflector 736, such as a mirror, outboard of the waveguide 728. The adjustable reflector 736 is positioned within the axial path of the beam 750 and is angled to deflect the beam 750 so that the beam 750 exits the open end 738 of the end effector 730 at an angle relative to axis E.

To achieve the rotational scanning of the beam 750 at the intended inspection area, the adjustable reflector 736 rotates 360 degrees about the axis E. The beam 750 is deflected from a reflective surface 735 of the adjustable reflector 736 out of the open end 738 of the end effector 730 to provide a 360 degree scan. The adjustable reflector 736 rotates uniformly at a set speed to ensure uniform rotation of the beam 750 and reliable, precise profilometry data.

The adjustable reflector 736 is configured to rotate about the axis E. The adjustable reflector 736 rotates relative to other portions of the end effector such as the housing 731 and relative to other portions of the inspection tool 105 such as the guide tube 116. Rotation of the adjustable reflector 736 can be achieved by different mechanisms. The end effector 730 shown in FIG. 12 illustrates a pneumatic mechanism. For instance, the end effector may include a pneumatic turbine 764 that is coupled to the adjustable reflector 736 so that rotation of the pneumatic turbine 764 rotates the adjustable reflector 736. The pneumatic turbine 764 may extend centrally along the central axis E and the waveguide 728 may extend axially through a central passage of the pneumatic turbine 764. A portion of the waveguide 728 may further extend through an elongated hollow shaft 765 of the turbine 764 inboard of the turbine blades. In some approaches, bearings 767 (e.g., ball bearings, air bearings, cylindrical bearings, needle bearings) support and align the turbine 764 and waveguide 728 along the central axis E. When an air bearing is employed, helical grooves can be added to generate lift and torque.

An end effector actuator 712 provides power/torque to the end effector 730 to rotate the pneumatic turbine 764. Specifically, in the illustrated embodiment the end effector actuator 712 includes a fluid source 768 that sends fluid (e.g., air). The end effector actuator 712 controls the flow of fluid through the inspection tool 105 to the end effector 730 to rotate the turbine 764 at a set speed to rotate the reflector 736.

In some approaches, additional pneumatic turbines are included in other portions of the insertion member 115 of the inspection tool 105, such as in links 120 of the flexible section 118 or in non-flexible portions, such as in the configurations (including a multistage turbine approach) described in U.S. Application 18/735,791 filed June 6, 2024, the entirety of which is incorporated herein by reference. In some approaches, the turbines are connected through flexible shafts or other flexible elements. The turbines herein are generally configured to transform fluid force of a fluid from the fluid path into torque to drive a rotation of adjustable reflector 736 of the end effector 730. In some embodiments, the fluid force may comprise pressurized air or fluid (e.g., compressed shop air), and may drive the pneumatic turbines via fluid pressure, fluid velocity, or fluid velocity-pressure compounded.

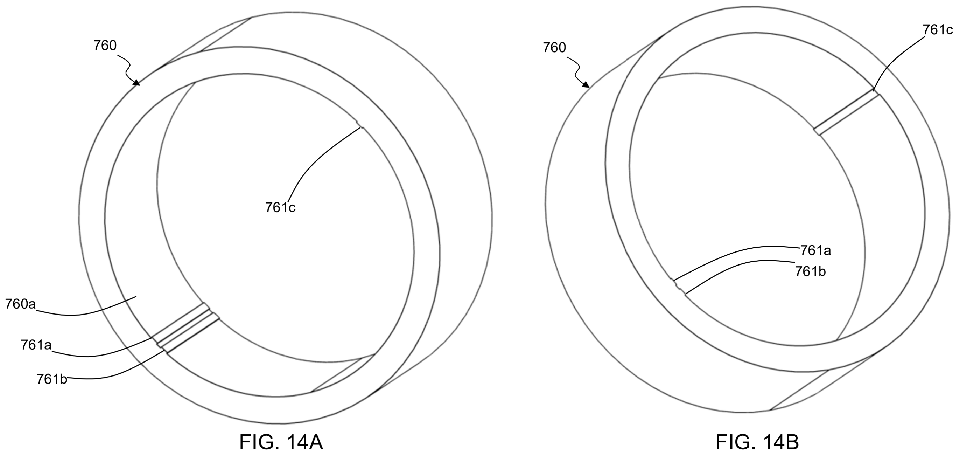

With reference to FIGS. 12 and 14A-14B, the end effector 730 also includes a calibration or gauge surface 760a that provides a self-calibration function for the end effector 730 and for the profilometry or interferometry operation more generally. The calibration surface 760a additionally functions to provide a highly accurate speed measurement of the end effector 730 at the tip to increase the accuracy of the profilometry or interferometry data.

In some approaches, the calibration surface 760a is an annular surface, for instance, carried on a calibration ring 760 disposed on an inside of the annular side wall of the housing 731 at the very distal end 738, facing radially inward. In embodiments, the calibration surface 760a or calibration ring 760 is integral with the housing 731, though in other approaches it may be a separate component coupled to the housing 731. The calibration surface 760a is at least partially axially outboard of the adjustable reflector 736 and is sized and positioned to be engaged by a beam deflected by a beam splitter 737 at the surface 735 of the adjustable reflector 736.

A beam splitter is an optical device that divides a beam of light into two or more separate beams. It achieves this by reflecting a portion of the light and transmitting the other portion simultaneously. Exemplary beam splitters include a mirror or reflector with a partially reflective coating or a dielectric coated surface that causes reflection of a portion of the incoming light while allowing the remaining portion to transmit through it. The specific ratio of reflection to transmission can be varied depending on design and use. Beam splitters such as cube beam splitters, polarizing beam splitters, dichroic beam splitters, and non-polarizing beam splitters can also be employed.

More specifically, the beam splitter 737 is configured to split the beam 750 into a first "transmitted" beam 753 and a second "reflected" beam 759. The transmitted beam 753 is deflected out the end effector 730 to perform the inspection. The reflected beam 759 is directed by the beam splitter 737 to the calibration surface 760a. Rotation of the reflected beam 759 due to the rotating reflector 736 moves the reflected beam 759 along the calibration surface 760a, which is smooth and/or continuous with the exception of one or more discrete calibration features 761 or discrete surface features. The calibration features 761 can take different forms and are characterized generally by having an ability to alter a characteristic or property of the beam 759 (such as a frequency or wave pattern). Altering of the beam sends signals through the waveguide 728 back to the profilometry or interferometry device 106 and/or computing device 110 (FIG. 2A). Since the locations of the calibration features 761 are known, detection of the altered beam by the profilometry or interferometry device 106 registers or logs the current location of the reflected beam 759 (which is a location proxy for the current location of the transmitted beam 753 performing the inspection). Based on the detected location of the beam, adjustments can be made to the operation of the end effector 730, for example the rotation speed, while the inspection is ongoing.

In various approaches, the discrete calibration features 761 may include height or depth changes in the calibration surface 760a such as notches, grooves, ridges, gratings, and patterns, etc. In some approaches, the discrete calibration features 761 may include a change in material such that the material alters a characteristic of the beam (e.g., a material that polarizes or scatters light). In various approaches, the materials include metals and/or plastics. In an exemplary embodiment, there may be a polarizing filter over a reflector, the filter including a plastic film with a polarizing treatment. In some embodiments, as shown in FIGS. 14A and 14B, there may be two adjacent ridges 761a, 761b spanning a width of the calibration surface 760a at a first portion of the ring 760 and one ridge 761c spanning a width of the calibration surface 760a on the ring 760 substantially opposite the two ridges 761a, 761b. The presence of multiple calibration features 761 distributed at different positions about the surface 760a can increase the precision of the location information since the different features 761 can be differentiated. The number, size, and shape of the discrete calibration features 761 on the surface 760a, however, are not particularly limited. However, the size and shape, in certain approaches, should be large enough so that the reflected beam 759 engages the calibration features 761 even when the angle of the reflected beam 759 is varied.

As noted above, the calibration surface 760a may also provide information to attain an accurate speed measurement at the tip of the end effector 730. Specifically, signals generated as a result of the beam 759 repeatedly engaging and being altered by the discrete calibration features 761 as it rotates about the surface 760a indicate a distance and time travelled by the beam 759 to calculate a speed. The highly accurate speed measurement that is attained is important for determining the profile of the inspected area. More specifically, the rotation speed of the beam is a key input into the processing equations and algorithms for determining measurements of the inspected area and generating a point cloud, map, or 3D image of the inspected area that accurately renders the geometry of the area being inspected. While a speed of rotation is typically pre-set, the actual speed of rotation may slightly diverge from the set value. Measuring and monitoring the actual speed of rotation directly at the tip of the end effector 730 allows the speed to be adjusted to achieve the desired speed and increases the precision of the profilometry or interferometry data.

Advantageously, the calibration surface 760a enables robust variable speed measurements without requiring a dedicated speed sensor. However, in some approaches, magnetic encoders, optical pickup devices, or other sensors may be integrated into the end effector 730.

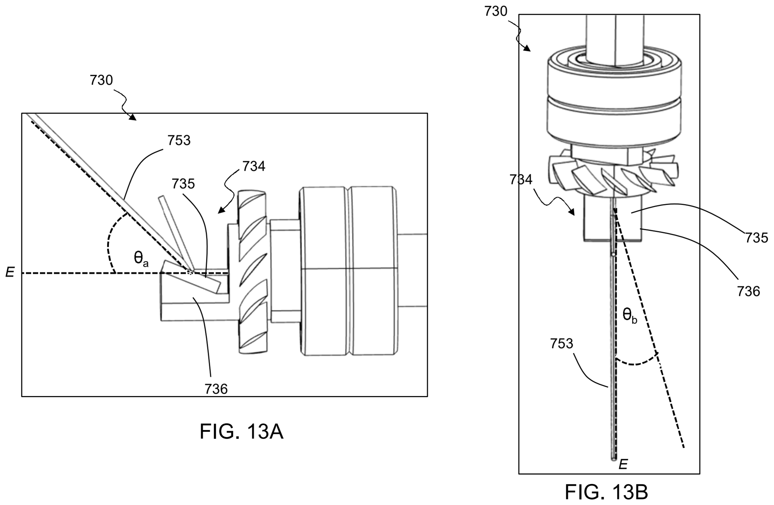

With reference to FIGS. 12, 13A, and 13B, the adjustable reflector 736 may be selected from a variety of different types of reflective components such as mirrors (e.g., flat or curved), prisms, metal surfaces, dielectric coatings, specular reflectors, foils, Mylar, etc. The type of reflector may be selected based on factors such as the wavelength of the beam 750 and/or the manner in which the reflector deflects the beam 750.

As noted above, the reflective surface 735 of the adjustable reflector 736 is in the axial path of the beam 750 as it exits the waveguide 728 and is angled relative to the central axis E so that the beam 750, upon contact with the reflective surface 735, is deflected out of the open end 738 of the end effector 730 at an angle. Thus, the "transmitted" beam 753 exits the end effector 730 at an angle θₐ relative to the central axis E.

The angle θₐ of the beam may be adjusted to a set angle by adjusting the angle of the surface 735 of the adjustable reflector 736. Thus, the adjustable reflector 736 may have pitch rotation and be adjustable (before or during operation) to pivot forward and back to change the angle of the reflective surface 735 and thereby change the angle θₐ of the transmitted beam 753. It will be appreciated that increasing the angle θₐ increases the diameter of the scanned area defined by the rotating beam, while decreasing the angle θₐ decreases the diameter of the scanned area. In some embodiments, the angle θₐ is greater than 0 degrees and less than or equal to 75 degrees. In some approaches, the angle θₐ is adjustable to less than or equal to 65 degrees, less than or equal to 60 degrees, less than or equal to 55 degrees, or less than or equal to 50 degrees. The maximum angle may be determined based in part on the distance the reflector 736 is set back from the open end 738 of the end effector 730 as well as the diameter of the open end 738.

Movement of the reflector 736 can be actuated by various actuators, such as, for example, a Galvano actuator, a piezoelectric actuator, an ultrasonic actuator, an electromagnetic actuator, or a motor which can be automatically controlled (e.g., through preset system programming) or controlled by an operator via an end effector controller 112 (FIG. 2A).

In some embodiments, the adjustable reflector 736 has other types of rotation such as roll and yaw. For instance, when the reflective surface 735 is rotated side-to-side (roll), an angle θ_{b} of the transmitted beam 253 relative to the central axis E is adjusted. The adjustability of the reflector 736 allows finetuned control of the beam to efficiently maximize scanning coverage during an inspection.

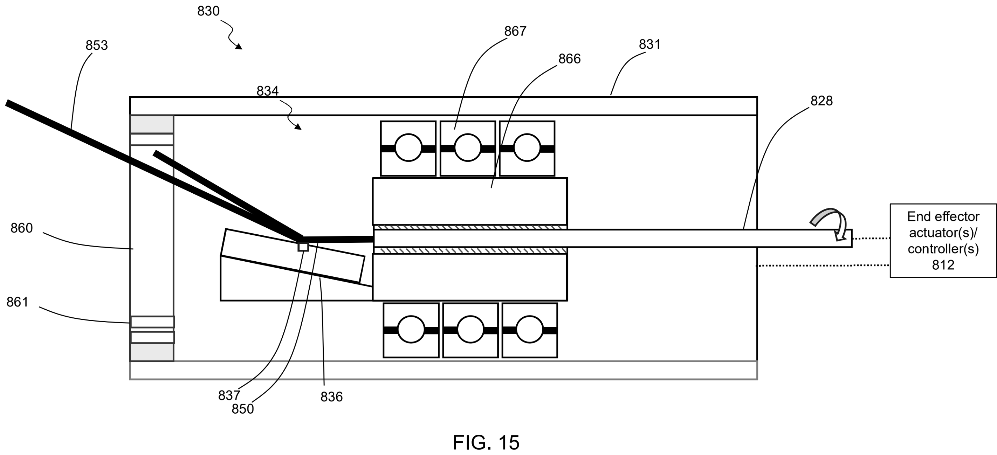

FIG. 15 illustrates an exemplary end effector 830 that is similar in many respects to end effector 730 described above. However, for end effector 830, rotation of the adjustable reflector 836 is driven by a rotating waveguide such as, for example, a rotating optical fiber 828. In this embodiment, the optical fiber 828 extends through the inspection tool 105 (FIG. 2A) and into the end effector 830 and transmits a beam from the electromagnetic source 108. The optical fiber 828 extends along a central axis of the end effector 830 and through a support 866 (e.g., a hollow shaft). The optical fiber 828 is bonded to the support 866 so that rotation of the optical fiber 828 rotates the support 866 and the adjustable reflector 836 which is fixed to the support 866. In some embodiments, the end effector actuator 812 for rotating the optical fiber 828 includes a motor (e.g., an electric motor, a pneumatic-driven motor) for providing torque to the optical fiber 828.

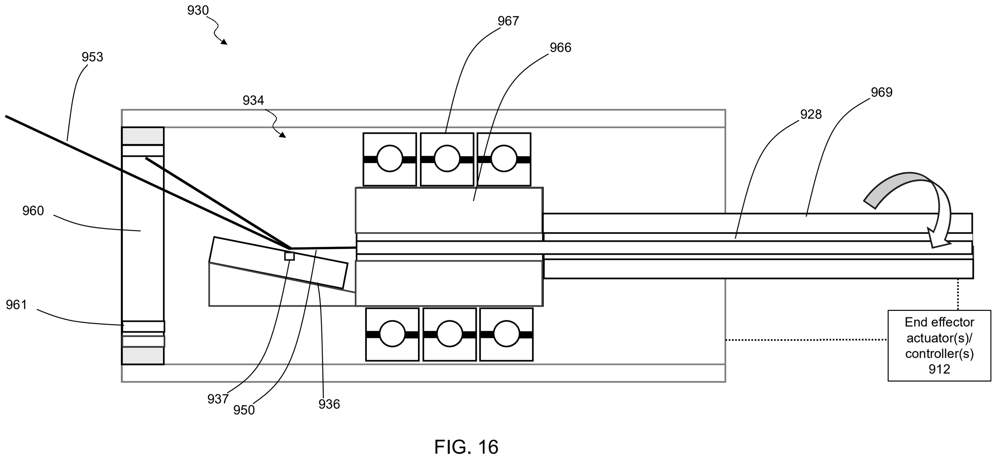

FIG. 16 illustrates an exemplary end effector 930 that is similar in many respects to end effectors 730 and 830 described above. However, for end effector 930, rotation of the adjustable reflector 936 is driven by a rotating flexible shaft 969 or flexible tube that extends through the inspection tool 105 (e.g., through the guide tube 116) (FIG. 2A) and into the end effector 930. The flexible shaft 969 includes a central cavity through which the waveguide 928 extends. In some approaches, a distal end of the flexible shaft 969 is bonded to a support 966 (e.g., a hollow shaft), which may be supported concentrically by bearings 967, and the waveguide 928 extends through the support 966. Rotation of the flexible shaft 969 thus rotates the support 966 and the adjustable reflector 936 which is fixed to the support 966. In some embodiments, the end effector actuator 912 may comprise a motor (e.g., an electric motor, a pneumatic-driven motor) for providing torque to the flexible shaft 969. In some embodiments, the end effector actuator 912 may be a rotary motor or a linear motor with a rotary motion conversion mechanism, and may, for example, be positioned at a distal end of the flexible shaft 969 at the distal end 126a (FIG. 2A) of the inspection tool. In an exemplary embodiment, an air turbine may be used to drive rotation of the flexible shaft 969. In some embodiments, a gear transmission for rotating the flexible shaft 969 may be integrated within the end effector.

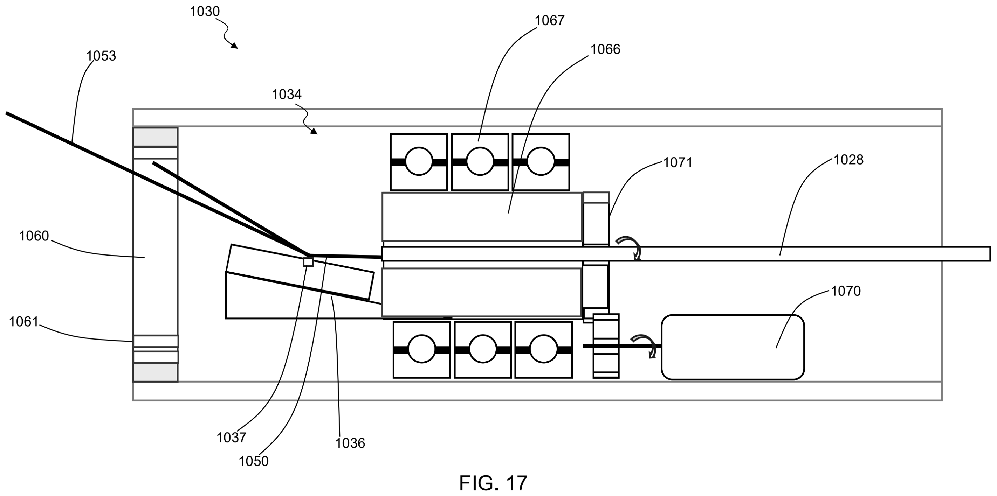

FIG. 17 illustrates an exemplary end effector 1030 that is similar in many respects to the end effectors described above. However, for end effector 1030, rotation of the adjustable reflector 936 is driven by a micro motor 1070 integrated within the end effector 130. More specifically, in some approaches, the motor 1070 drives rotation of one or more gears including a gear 1071 bonded to the central support 1066 or shaft, which rotates the central support 1066 and the adjustable reflector 1036 which is fixed to the central support 1066. Other configurations of gears are possible besides the illustrated configuration. In some embodiments, the motor 1070 is an electric motor. In some embodiments, the motor 1070 is a pneumatic-driven motor, such as the motor described in U.S. Application 18/735,791 filed June 6, 2024, the entirety of which is incorporated herein by reference.

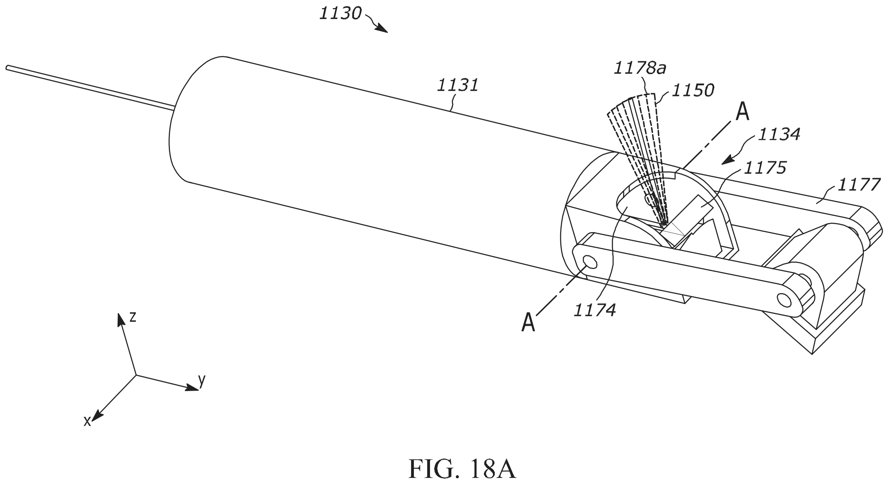

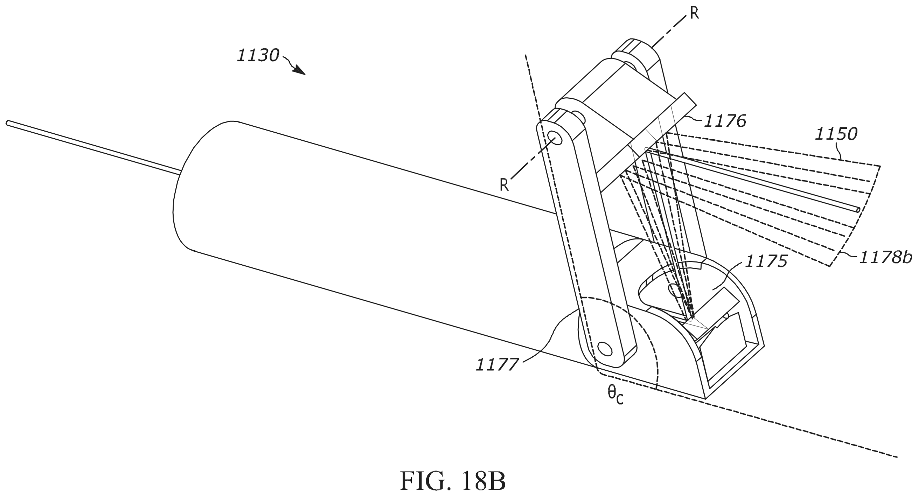

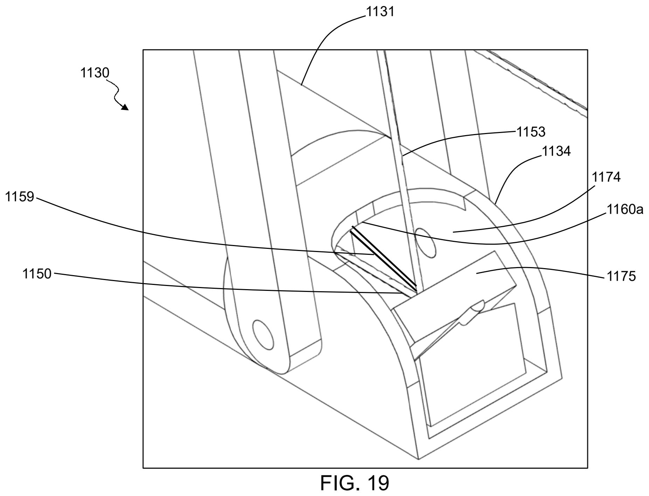

FIGS. 18A, 18B, and 19 illustrate an exemplary end effector 1130 that is configured for raster scanning instead of rotational scanning, in accordance with some embodiments. The end effector 1130 can be coupled to a distal end of the guide tube 116 or other type of insertion member 115 (e.g., a robotic arm) of the inspection tool 105 (FIG. 2A). In some embodiments, the end effector 1130 is coupled to an end link 120 of the flexible section 118 (FIG. 2A). As described above, the end effector 1130 can be moved and oriented in different directions relative to other portions of the insertion member 115 when the inspection tool 105 is rigidized and/or when the shape of the inspection tool 105 is changed (FIG. 2A).

Like the above-described end effectors, the end effector 1130 includes a housing 1131 with a central inner cavity (not shown) that encloses the waveguide (not shown). An electromagnetic sensor head 1134 extends axially from the housing 1131. The electromagnetic sensor head 1134 includes a side opening 1174 or access through which the beam 1150 is emitted from the head 1134. Thus, sensor head 1134 is configured to transmit the beam 1150 radially (e.g., in the z direction) from the end effector 1130.

More specifically, the end effector 1130 includes a first reflector 1175 and a second reflector 1176. The first reflector 1175 is positioned in the path of the beam 1150 exiting the waveguide (not shown) and is angled to deflect the beam 1150 radially out the side opening 1174, that is, in the z direction and out of the main plane of the end effector 1130. The first reflector 1175 pivots side-to-side (roll rotation) in the x direction to cause rastering of the beam 1150 along a first plane at the target area. In an exemplary embodiment, the movement of the first reflector 1175 is actuated by a piezoelectric actuator integrated with the first reflector 1175, though other types of actuators (Galvano actuator, ultrasonic, electromagnetic, motors) are also possible. The extent or span of the rastering can be adjusted.

The first reflector 1175 may also have other types of rotation. For instance, like the adjustable reflector 736 described above (FIG. 12), the first reflector 1175 can be adjusted forward and back to different angular positions (pitch rotation) that can be preset or controlled to change the angle of the rastering beam 1150.

The end effector 1130 also includes a second reflector 1176 that can be moved between a first position in which the second reflector 1176 is generally axially aligned with the main longitudinal axis y of the end effector 1130 and in front of the electromagnetic sensor head 1134 and a second position in which the second reflector 1176 is radially offset from the end effector 1130 and to the side of the electromagnetic sensor head 1134. In the second position, the second reflector 1176 may be generally aligned with the side opening 1174 or at least positioned to engage the beam 1150 transmitting from the side opening 1174 from the first reflector 1175. Stated in another way, in some approaches the second reflector 1176 is movable between a first position out of a path of the beam 1150 deflected from the first reflector 1175 and a second position within the path of the beam 1150 deflected from the first reflector 1175.

In some embodiments, the second reflector 1176 is carried at an end of a pivotable arm assembly 1177 (such as a lever arm assembly with two arms) so that the second reflector 1176 can be pivoted between the first and second positions. The pivotable arm assembly 1177 may be pivotably attached to the sensor head 1134 or to the housing 1131 of the end effector 1130 and pivot with respect to axis A. In some embodiments, the pivotable arm assembly 1177 has a range of motion so that θ_{c} defined between the main longitudinal axis of the end effector 1130 is between about 0 degrees and about 100 degrees. In some embodiments, the pivotable arm assembly 1177 may be pivoted beyond 100 degrees. In some embodiments, θ_{c} may be between 0 degrees and 90 degrees. In some approaches, the pivotable arm assembly 1177 can only be set at two positions, for instance at about 0 degrees and 90 degrees. In other approaches the pivotable arm assembly 1177 can be set at more than two positions, such as three or more. In some approaches the pivotable arm assembly 1177 can be set at any position within its range of motion. The pivotable arm assembly 1177 may be controlled by one of the end effector actuators/controllers 112 (FIG. 2A). For instance, the pivotable arm assembly 1177 may be controlled via mechanical actuation through an internal link mechanism. In another example, a pulley and/or gear assembly may be employed with ropes or belts operably coupled to electric motors.

Advantageously, the first position of the second reflector 1176 in which the second reflector 1176 is generally axially aligned with the main longitudinal axis y of the end effector 1130 and in front of the electromagnetic sensor head 1134 facilitates insertion of the inspection tool and end effector 1130 into a narrow space. Specifically, the compactness and linear geometry of the first position can help the tool fit within a narrow insertion port or passage. However, after the tool is positioned within the target space, the second reflector 1176 can be pivoted via the pivotable arm assembly 1177 to the second radial position for the scanning operation if needed.

The presence of the second reflector 1176 provides further adjustability and range to the scanning operation to maximize scanning coverage while minimizing the need to move or reconfigure the inspection tool. When the second reflector 1176 is adjusted to the second position, the beam 1150 transmitted from the first reflector 1175 is further deflected by the second reflector 1176. More specifically, a surface of the second reflector 1176 is angled to deflect the beam 1150 at a preset angle to cause rastering of the beam 1150 along a second plane at the target area. Like with the first reflector 1175, the angle of the surface of the second reflector 1176 can be adjusted or controlled through pitch rotation of the second reflector 1176 either alone or in combination with adjusting the pivot position of the pivotable arm assembly 1177. In some approaches, the second reflector 1176 is pivotably coupled to the pivotable arm assembly 1177 and pivots relative to the arms on axis R to provide the pitch rotation. In some approaches, the pitch rotation of the second reflector 1176 employs a piezoelectric actuator, though other actuators may be employed (e.g., Galvano, ultrasonic, electromagnetic, motors). In some embodiments, the second reflector 1176 may also be roll rotatable and/or yaw rotatable to adjust the angle and plane of the scanning beam. The reflectors 1175, 1176 may be mirrors (flat, curved, convex, etc.), prisms, metal surfaces, dielectric coatings, or other types of reflectors.

FIG. 18A shows the second reflector 1176 in the first position in which the second reflector 1176 is out of the path of the rastering beam 1150 deflecting generally radially from the first reflector 1175. Thus, the rastering beam 1150 is directed generally radially from the end effector 1130 to a target area that is positioned radially from the end effector 1130 and defines a first plane of scanning 1178a. FIG. 18B shows the second reflector 1176 in the second position in which the second reflector 1176 is in the path of the rastering beam 1150 deflecting generally radially from the first reflector 1175. Thus, the second reflector 1176, in the path of the beam, further deflects the beam 1150 by redirecting the rastering beam in a generally axial direction while the rastering beam 1150 may be simultaneously radially spaced from the end effector 1130. Thus, the rastering beam can be directed to a target area that is positioned ahead of the end effector 1130 while also being radially offset from the end effector 1130 to define a second plane of scanning 1178b. Due to the various freedoms and adjustability of the reflectors, the first and second planes of scanning 1178a, 1178b may be greatly varied to achieve a comprehensive and precise scan of a space from multiple angles.

As shown in FIG. 19, the end effector 1130 may also be configured with a self-calibration function, a calibration surface 1160a, and an associated beam splitter (not shown) similar to those described above with respect to end effector 730. As described above, a beam splitter disposed at the first reflector 1175 splits the beam 1150 into a first "transmitted" beam 1153 and a second "reflected" beam 1159. The transmitted beam 1153 is deflected out the end effector 1130 to perform the inspection. The reflected beam 1159 is directed by the beam splitter 1137 to a calibration surface 1160a that may, for example, be integral with a housing of the sensor head 1134. The calibration surface 1160a may be sized and positioned to be engaged by the reflected beam 1159 as the reflected beam 1159 rasters back and forth. For instance, the calibration surface 1160a may be an elongated strip positioned to be engaged by the reflected beam 1159 in its full range of rastering motion. The surface 1160a may be disposed on an inner surface of the housing of the sensor head 1134. Like with calibration surface 760a (FIG. 12), calibration surface 1160a may be generally smooth and/or continuous with the exception of one or more discrete calibration features 1161 that alter a characteristic or property of the beam 1159 to send location information back to the system. The discrete calibration features 1161 are logged by the system each time the rastering reflected beam 1159 passes the features 1161. The types of discrete calibration features 1161 as well as the self-calibration and speed measurement functions of the calibration surface 1160a are the same as described above for end effector 730.

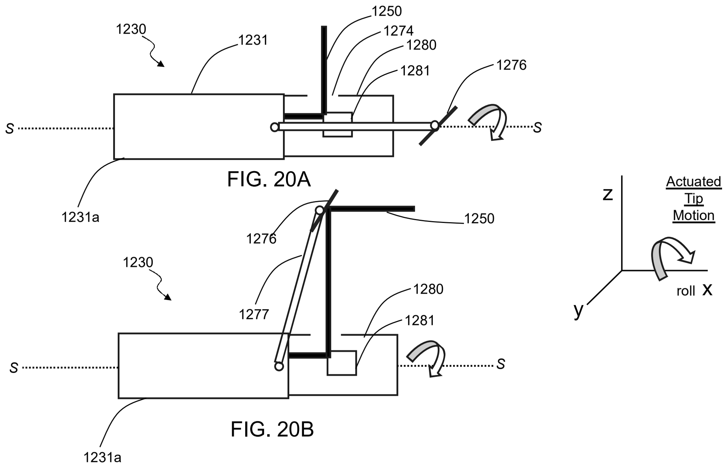

FIGS. 20A and 20B illustrate an exemplary end effector 1230 that is configured for raster scanning, in accordance with some embodiments. The end effector 1230 is similar to the end effector 1130 discussed above in many respects, but has a different mechanism for rastering the beam, as described further below.

Like the above-described end effectors, the end effector 1230 includes a housing 1231 with a central inner cavity (not shown) that encloses the waveguide (not shown) extending axially through the end effector 1230. The end effector 1230 further includes an actuatable sensor tip 1280 or sensor head extending axially from the housing 1131 and pivotably fixed thereto. The actuatable sensor tip 1280 houses an optics assembly 1281 such as one or more reflectors downstream of the waveguide to deflect the beam 1250. Like end effector 1130, the end effector 1230 has a side opening 1274 and the optics assembly 1281 deflects the beam 1250 generally radially from the end effector 1230 out the side opening 1274. The optics assembly 1281 may be adjustable to adjust the angle of the transmitted beam 1250.

In contrast to end effector 1130, rastering of the beam 1250 in end effector 1230 is not caused by a roll rotatable reflector. Instead, the entirety of the actuatable sensor tip 1280 is roll rotatable (e.g., about the S axis) to raster the beam 1250. That is, the actuatable sensor tip 1280 rotates or pivots relative to the main body 1231a of the end effector housing 1231. In some approaches, the movement of the actuatable sensor tip 1280 is piezoelectric-actuated. In other approaches, the movement may be actuated by a motor, a Galvano actuator, an ultrasonic actuator, an electromagnetic actuator, or other actuators.

The remaining functionality of the end effector 1230 is similar to end effector 1130. Like end effector 1130, the end effector 1230 may have a pivotable arm assembly 1277 that carries a reflector 1276 which can move between a first position outside the path of the beam 1250 deflecting from the optics assembly 1281 and a second position within the path of the beam 1250 deflecting from the optics assembly 1281. In this case, however, the pivotable arm assembly 1277 is attached to the main body 1231a of the housing 1231 instead of to the actuatable sensor tip 1280 so that the actuatable sensor tip 1280 rotates relative to the reflector 1276. In the first position of the reflector 1276, the optics assembly 1281 deflects the beam 1250 generally radially outward from the end effector to raster the beam along a first plane at the target area. In the second position, the beam 1250 deflected from the optics assembly 1281 contacts the reflector 1276 which further redirects the beam 1250 to cause rastering of the beam along a second plane at the target area. As noted above, due to the various freedoms and adjustability of the reflectors, the scanning planes may be greatly varied to achieve a comprehensive and precise scan of a space from multiple angles.

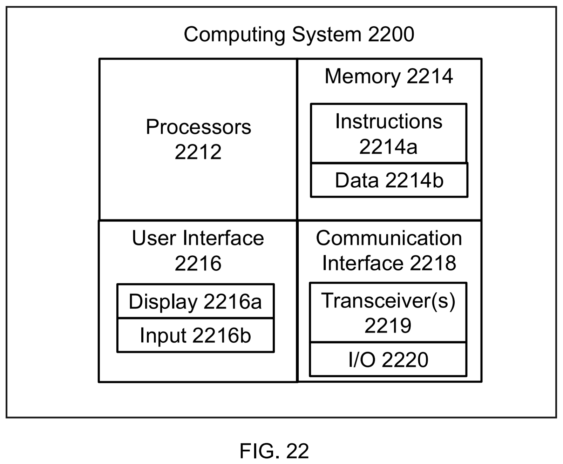

Referring to FIG. 22, a block diagram of a computing system 2200 that can be used to implement the systems and methods of the present disclosure is provided in accordance with an exemplary embodiment of the present disclosure. Computing system 2200 may be used to implement the inspection systems described herein, and may, for example, include or implement computing device 110 (FIG. 2A). It will be appreciated, however, that computing system 2200 is one example of a suitable computing system for implementing the inspection system and other computing elements described herein and the components may be distributed over one or more computing devices.

As shown, the computing system 2200 can include one or more processors 2212 and one or more memory components 2214. The one or more processors 2212 can include any suitable processing device, such as a microprocessor, microcontroller, integrated circuit, logic device, or other suitable processing device. The one or more memory components 2214 can include one or more computer-readable media, including, but not limited to, non-transitory computer-readable media, RAM, ROM, hard drives, flash drives, or other memory devices. The one or more memory components 2214 can include remote storage or internet storage, such as cloud storage. The one or more memory components 2214 can store information accessible by the one or more processors 2212, including computer-readable instructions 2214a that can be executed by the one or more processors 2212. The computer-readable instructions can be any set of instructions that when executed by the one or more processors 2212, cause the one or more processors 2212 to perform operations. The computer-readable instructions can be software written in any suitable programming language or program code or can be implemented in hardware. In some embodiments, the computer-readable instructions can be executed by the one or more processors 2212 to cause the one or more processors 2212 to perform operations, such as the operations for controlling the inspection systems described herein, and/or any other operations or functions associated with detecting and processing inspection data.

The memory components 2214 can further store data 2214b that can be accessed by the processors 2212. For example, the data can include inspection data such as location data, depth data, defect data, image data, etc. The data can include one or more tables, functions, algorithms, 2D and 3D images, equations, etc.

The computing system 2200 also includes a communication interface 2218 used to communicate, for example, among different devices or components of the computing system 2200 and/or inspection system 100. The communication interface 2218 can include any suitable components for interfacing with one or more networks, including for example, transceivers 2219, transmitters, receivers, controllers, antennas, or other suitable components, as well as I/O ports 2220.

The technology discussed herein makes reference to computer-based systems and actions taken by and information sent to and from computer-based systems. One of ordinary skill in the art will recognize that the flexibility of computer-based systems allows for a great variety of possible configurations, combinations, and divisions of tasks and functionality between and among components. For instance, methods and processes discussed herein can be implemented using a single computing device or multiple computing devices working in combination. Databases, memory, instructions, and applications can be implemented on a single system or distributed across multiple systems. Distributed components can operate sequentially or in parallel.

Further aspects of the disclosure are provided by the subject matter of the following clauses:

An insertion tool for performing a profilometry operation on equipment, the insertion tool including a tube including a flexible section including at least two joints for articulating the flexible section into different shapes, the flexible section selectively configurable between an unrigidized state and at least a first rigid state having a first non-linear shape; an end effector coupled to a distal end of the tube and comprising a sensor head, the sensor head to direct or target a beam toward a target area of the equipment to perform the profilometry operation; a waveguide extending through the tube, the waveguide to transmit the beam from an electromagnetic source to the end effector and to transmit electromagnetic signals from the end effector to a profilometry detecting device; and an end effector actuator for moving the beam at the target area, wherein the end effector is axially spaced from an insertion axis of the insertion tool when the flexible section is in the first rigid state to obtain off-axis profilometry measurements at the target area.

The insertion tool of any preceding clauses, wherein the flexible section is selectively configurable to a second rigid state having a second non-linear shape different from the first non-linear shape.

The insertion tool of any preceding clauses, wherein the end effector includes a reflector having an adjustable angle to deflect the beam at a set angle towards the target area from a distal open end of the end effector.

The insertion tool of any preceding clauses, wherein the reflector is rotatable about a central axis of the end effector so that the beam is rotated at the target area.

The insertion tool of any preceding clauses, wherein torque is to be transferred pneumatically from the end effector actuator to an air turbine of the end effector, such that rotation of the air turbine causes rotation of the reflector.

The insertion tool of any preceding clauses, wherein the end effector actuator is to cause the reflector to rotate via at least one of a motor located within or adjacent the end effector, rotation of a flexible shaft extending through the tube and coupled to the end effector, rotation of an optical fiber defining the waveguide, or pneumatically via an air turbine.

The insertion tool of any preceding clauses, wherein the end effector includes a beam splitter at a distal end thereof, the beam splitter to split the beam from the waveguide such that a first beam is deflected towards the target area and a second beam is deflected towards an inner calibration surface of the end effector.

The insertion tool of any preceding clauses, wherein the inner calibration surface includes at least one discrete calibration feature at a position of the inner calibration surface, and wherein the at least one discrete calibration feature is to alter the second beam to provide information to determine a speed measurement of the beam and/or to self-calibrate the end effector.

The insertion tool of any preceding clauses, wherein the inner calibration surface includes at least two discrete surface features at two different positions of the inner calibration surface.

The insertion tool of any preceding clauses, wherein the flexible section of the tube includes a plurality of rigidizable links and a rigidization actuator configured to actuate the plurality of rigidizable links in the flexible section from the unrigidized state to the first rigid state or a second rigid state, wherein the rigidization actuator is to selectively configure at least one joint between at least two rigidizable links via wire pulling, magnets, pneumatic bellows, shape memory materials, or bi-stable structures to actuate the flexible section to the first rigid state or the second rigid state.

The insertion tool of any preceding clauses, wherein the flexible section of the tube includes a plurality of rigidizable links and a rigidization actuator to actuate the plurality of rigidizable links in the flexible section from the unrigidized state to the first rigid state or a second rigid state.

The insertion tool of any preceding clauses, wherein the end effector includes a first pivoting reflector to deflect the beam radially outward from the end effector to the target area, wherein pivoting of the pivoting reflector rasters the beam along a first plane at the target area.

The insertion tool of any preceding clauses, wherein the end effector includes a second pivoting reflector, the second pivoting reflector movable between a first position out of a path of the beam deflected from the first pivoting reflector and a second position within the path of the beam deflected from the first pivoting reflector, wherein when the second pivoting reflector is in the second position the second pivoting reflector deflects the beam to cause rastering of the beam along a second plane at the target area.

A system for performing a profilometry operation on equipment, the system including: an interferometer including an electromagnetic source and a processing device to determine a profile of a target area of the equipment from detected interference patterns; an insertion tool coupled to the interferometer for inserting into the equipment to the target area, the insertion tool including: a housing, the housing including a flexible section that is selectively configurable between an unrigidized state and at least one rigid state having a non-linear shape, an end effector coupled to a distal end of the housing, the end effector to emit a beam from the electromagnetic source to perform the profilometry operation at the target area, and a waveguide within the housing to transmit the beam between the interferometer and the end effector; and an end effector actuator to move the beam at the target area.

The system of any preceding clauses, wherein the flexible section includes at least two joints to articulate the flexible section into different shapes, the flexible section being selectively configurable between at least the unrigidized state, a first rigid state having a first non-linear shape, and a second rigid state having a second non-linear shape.

The system of any preceding clauses, wherein the end effector includes a reflector having an adjustable angle to deflect the beam at a set angle towards the target area from a distal open end of the end effector, the reflector further configured to rotate about a central axis of the end effector so that the beam is rotated at the target area.

The system of any preceding clauses, wherein the reflector is rotatable about a central axis of the end effector so that the beam is rotated at the target area.

The system of any preceding clauses, wherein the end effector actuator is to cause the reflector to rotate via at least one of a motor located within or adjacent the end effector, rotation of a flexible shaft extending through the housing and coupled to the end effector, rotation of an optical fiber defining the waveguide, or pneumatically via an air turbine.

The system of any preceding clauses, wherein torque is transferred pneumatically from the end effector actuator to an air turbine of the end effector, rotation of the air turbine causing rotation of the mirror.

The system of any preceding clauses, wherein the end effector includes a beam splitter at a distal end thereof, the beam splitter to split the beam from the waveguide such that a first beam is deflected towards the target area and a second beam is deflected towards an inner calibration surface of the end effector, the inner calibration surface including at least one discrete calibration feature to alter the second beam to provide information to determine a speed measurement of the beam and/or to self-calibrate the end effector.

The system of any preceding clauses, wherein the flexible section of the housing includes a plurality of rigidizable links and a rigidization actuator configured to actuate the plurality of rigidizable links in the flexible section from the unrigidized state to the at least one rigid state.

The system of any preceding clauses, wherein the end effector includes a first pivoting reflector to deflect the beam radially outward from the end effector to the target area, wherein pivoting of the pivoting reflector rasters the beam along a first plane at the target area.

The system of any preceding clauses, wherein the end effector includes a second pivoting reflector, the second pivoting reflector movable between a first position out of a path of the beam deflected from the first pivoting reflector and a second position within the path of the beam deflected from the first pivoting reflector, wherein when the second pivoting reflector is in the second position the second pivoting reflector deflects the beam to cause rastering of the beam along a second plane at the target area.

The system of any preceding clauses, wherein the pivoting of the first pivoting reflector occurs via at least one of a motor, a Galvano actuator, a piezoelectric actuator, ultrasonic actuation, or electromagnetic actuation.

An inspection tool for performing a profilometry operation on equipment, the inspection tool including: an insertion member including an elongated flexible section including at least two joints for articulating the flexible section into different shapes, the flexible section selectively configurable between at least a first non-linear shape and a second non-linear shape; an end effector coupled to a distal end of the insertion member, the end effector to emit a beam to perform the profilometry operation at a target area of the equipment; a waveguide extending through a cavity of the insertion member, the waveguide to transmit the beam from an electromagnetic source to the end effector; and an end effector actuator to move the beam at the target area, wherein the end effector is axially spaced from an insertion axis of the insertion tool when the flexible section is in at least the first non-linear shape or the second non-linear shape to obtain off-axis profilometry measurements at the target area.

The inspection tool of any preceding clauses, wherein the insertion member is a rigidizable guide tube.

The inspection tool of any preceding clauses, wherein the insertion member is a snake arm robot.

An inspection tool for performing a profilometry operation on equipment, the inspection tool including: an elongated insertion member; an end effector coupled to a distal end of the insertion member, the end effector to emit a beam to perform the profilometry operation at a target area of the equipment, the end effector including a reflector having an adjustable angle to deflect the beam at a selected angle towards the target area from a distal open end of the end effector and the reflector actuatable to rotate about a central axis of the end effector so that the beam rotationally scans the target area; and a waveguide extending through a cavity of the insertion member, the waveguide to transmit the beam from an electromagnetic source to the reflector.

The inspection tool of any preceding clauses including an elongated flexible section that is reconfigurable into different shapes.

The inspection tool of any preceding clauses wherein torque is to be transferred pneumatically from the end effector actuator to an air turbine of the end effector, such that rotation of the air turbine causes rotation of the reflector.

The inspection tool of any preceding clauses wherein the end effector includes a beam splitter at a distal end thereof, the beam splitter to split the beam from the waveguide such that a first beam is deflected towards the target area and a second beam is deflected towards a calibration surface of the end effector.

The inspection tool of any preceding clauses wherein the calibration surface includes at least one discrete surface feature at a position of the calibration surface; the at least one discrete surface feature to alter the second beam to provide information to determine a speed measurement of the beam and/or to self-calibrate the end effector.

An inspection tool for performing a profilometry operation on equipment, the inspection tool including: an elongated insertion member; an end effector coupled to a distal end of the insertion member, the end effector to emit a beam to perform the profilometry operation at a target area of the equipment, the end effector including a first pivoting reflector to deflect the beam radially outward from the end effector to the target area, wherein pivoting of the pivoting reflector rasters the beam along a first plane at the target area; and a waveguide extending through a cavity of the insertion member, the waveguide to transmit the beam from an electromagnetic source to the first pivoting reflector.

The inspection tool of any preceding clauses wherein the end effector includes a second pivoting reflector, the second pivoting reflector movable between a first position out of a path of the beam deflected from the first pivoting reflector and a second position within the path of the beam deflected from the first pivoting reflector, wherein when the second pivoting reflector is in the second position the second pivoting reflector deflects the beam to cause rastering of the beam along a second plane at the target area.

The inspection tool of any preceding clauses wherein the end effector includes a beam splitter at a distal end thereof, the beam splitter to split the beam from the waveguide such that a first beam is deflected towards the target area and a second beam is deflected towards a calibration surface of the end effector.

The inspection tool of any preceding clauses wherein the inner calibration surface includes at least one discrete surface feature at a position of the calibration surface; the at least one discrete surface feature to alter the second beam to provide information to determine a speed measurement of the beam and/or to self-calibrate the end effector.

An inspection tool for performing a profilometry operation on equipment, the inspection tool including: an elongated insertion member; an end effector coupled to a distal end of the insertion member, the end effector to emit a beam to perform the profilometry operation at a target area of the equipment, the end effector having a main housing and an actuatable tip, the actuatable tip including a first reflector to deflect the beam radially outward from the end effector to the target area, wherein the actuatable tip is actuatable to pivot to cause rastering of the beam along a first plane at the target area; and a waveguide extending axially through a cavity of the insertion member and the end effector, the waveguide to transmit the beam from an electromagnetic source to the first reflector.

The inspection tool of any preceding clauses wherein the end effector includes a second reflector, the second reflector movable between a first position out of a path of the beam deflected from the first reflector and a second position within the path of the beam deflected from the first pivoting reflector, wherein when the second reflector is in the second position the second pivoting reflector deflects the beam to cause rastering of the beam along a second plane at the target area.

## Claims

1. An insertion tool (105) for performing a profilometry operation on equipment, the insertion tool (105) comprising:
a tube (116) including a flexible section (118) comprising at least two joints (122) for articulating the flexible section (118) into different shapes, the flexible section (118) selectively configurable between an unrigidized state and at least a first rigid state having a first non-linear shape;
an end effector (130) coupled to a distal end (126b) of the tube (116) and comprising a sensor head (134), the sensor head (134) to direct a beam toward a target area of the equipment to perform the profilometry operation;
a waveguide (128) extending through the tube (116), the waveguide (128) to transmit the beam from an electromagnetic source (108) to the end effector (130) and to transmit electromagnetic signals from the end effector (130) to a profilometry detecting device (106); and
an end effector actuator (112) to move the beam at the target area,
wherein the end effector (130) is axially spaced from an insertion axis of the insertion tool (105) when the flexible section (118) is in the first rigid state to obtain off-axis profilometry measurements at the target area.

2. The insertion tool (105) of claim 1, wherein the flexible section (118) is selectively configurable to a second rigid state having a second non-linear shape different from the first non-linear shape.

3. The insertion tool (105) of claims 1 or 2, wherein the end effector (130) includes a reflector (136) having an adjustable angle to deflect the beam at a set angle towards the target area from a distal open end (238) of the end effector (130).

4. The insertion tool (105) of claim 3, wherein the reflector (136) is rotatable about a central axis of the end effector (130) so that the beam is rotated at the target area; and
torque is to be transferred pneumatically from the end effector actuator (112) to an air turbine (764) of the end effector (130), such that rotation of the air turbine causes rotation of the reflector (136).

5. The insertion tool (105) of claim 3, wherein the reflector (136) is rotatable about a central axis of the end effector (130) so that the beam is rotated at the target area;
and the end effector actuator (112) is to cause the reflector (136) to rotate via at least one of a motor (1070) located within or adjacent the end effector (130), rotation of a flexible shaft (969) extending through the tube (116) and coupled to the end effector (130), rotation of an optical fiber (828) defining the waveguide, or pneumatically via an air turbine (764).

6. The insertion tool (105) of any of claims 1-5, wherein the end effector (130) includes a beam splitter (737) at a distal end thereof, the beam splitter (737) to split the beam from the waveguide (128) such that a first beam is deflected towards the target area and a second beam is deflected towards an inner calibration surface (760a) of the end effector (130); and
wherein the inner calibration surface (760a) includes at least one discrete calibration feature (761) at a position of the inner calibration surface (760a), and wherein the at least one discrete calibration feature (761) is to alter the second beam to provide information to determine a speed measurement of the beam and/or to self-calibrate the end effector (130).

7. The insertion tool (105) of any of claims 1-6, wherein the flexible section (118) of the tube (116) comprises a plurality of rigidizable links (120) and a rigidization actuator (114) configured to actuate the plurality of rigidizable links (120) in the flexible section (118) from the unrigidized state to the first rigid state or a second rigid state, wherein the rigidization actuator (114) is to selectively configure at least one joint (122) between at least two rigidizable links (120) via wire pulling, magnets, pneumatic bellows, shape memory materials, or bi-stable structures to actuate the flexible section to the first rigid state or the second rigid state.

8. The insertion tool (105) of claims 1, 2, 6, or 7 wherein the end effector (130) includes a first pivoting reflector (1175) to deflect the beam radially outward from the end effector (130) to the target area, wherein pivoting of the first pivoting reflector (1175) rasters the beam along a first plane at the target area.

9. The insertion tool (105) of claim 8, wherein the end effector (130) includes a second pivoting reflector (1176), the second pivoting reflector (1176) movable between a first position out of a path of the beam deflected from the first pivoting reflector (1175) and a second position within the path of the beam deflected from the first pivoting reflector (1175), wherein when the second pivoting reflector (1176) is in the second position the second pivoting reflector (1176) deflects the beam to cause rastering of the beam along a second plane at the target area.

10. A system (100) for performing a profilometry operation on equipment, the system (100) comprising:
an interferometer (106) including an electromagnetic source (108) and a processing device to determine a profile of a target area of the equipment from detected interference patterns;
an insertion tool (105) coupled to the interferometer for inserting into the equipment to the target area, the insertion tool (105) comprising:
a housing (116), the housing (116) including a flexible section (118) that is selectively configurable between an unrigidized state and at least one rigid state having a non-linear shape,
an end effector (130) coupled to a distal end (126b) of the housing (116), the end effector (130) to emit a beam from the electromagnetic source (108) to perform the profilometry operation at the target area, and
a waveguide (128) within the housing (116) to transmit the beam between the interferometer (106) and the end effector (130); and
an end effector actuator (112) to move the beam at the target area.

11. The system (100) of claim 10, wherein the flexible section (118) comprises at least two joints (122) to articulate the flexible section (118) into different shapes, the flexible section (1118) being selectively configurable between at least the unrigidized state, a first rigid state having a first non-linear shape, and a second rigid state having a second non-linear shape.

12. The system (100) of claims 10 or 11, wherein the end effector (130) includes a reflector (136) having an adjustable angle to deflect the beam at a set angle towards the target area from a distal open end of the end effector (130), the reflector (136) further configured to rotate about a central axis of the end effector (130) so that the beam is rotated at the target area.

13. The system (100) of any of claims 10-12, wherein the end effector (130) includes a beam splitter (737) at a distal end thereof, the beam splitter (737) to split the beam from the waveguide such that a first beam is deflected towards the target area and a second beam is deflected towards an inner calibration surface (760a) of the end effector (130), the inner calibration surface (760a) including at least one discrete calibration feature (761) to alter the second beam to provide information to determine a speed measurement of the beam and/or to self-calibrate the end effector (130).

14. The system (100) of any of claims 10-13, wherein the flexible section (118) of the housing (116) comprises a plurality of rigidizable links (120) and a rigidization actuator (114) configured to actuate the plurality of rigidizable links (120) in the flexible section (118) from the unrigidized state to the at least one rigid state.

15. The system (100) of any of claims 10, 11, 13, or 14, wherein the end effector (130) includes a first pivoting reflector (1175) to deflect the beam radially outward from the end effector to the target area, wherein pivoting of the first pivoting reflector (1175) rasters the beam along a first plane at the target area.
